# EUROPEAN PATENT APPLICATION

(11) **EP 4 583 606 A1**
(43) Date of publication of application: **09.07.2025**
(21) Application number: 23870418.3
(22) Date of filing: 18.09.2023
(51) Int. Cl.: H04W 72/04, H04B 17/382

(54) **COMMUNICATION METHOD AND APPARATUS**

(30) Priority: 30.09.2022 CN 202211209515; 25.10.2022 CN 202211308278
(71) Applicant: Huawei Technologies Co., Ltd., Shenzhen, Guangdong 518129 (CN)
(72) Inventor: WANG, Bichai, Shenzhen, Guangdong 518129 (CN); WU, Yue, Shenzhen, Guangdong 518129 (CN); LI, Xueru, Shenzhen, Guangdong 518129 (CN)
(74) Representative: Pfenning, Meinig & Partner mbB
(86) International application number: PCT/CN2023/119290
(87) International publication number: WO 2024/067184

(57) **Abstract**

This application relates to a communication method and apparatus. A terminal device determines, from a first resource pool, a first resource used to send sidelink information, where the first resource pool includes N frequency domain units. Each of the N frequency domain units includes a first frequency domain subunit, a second frequency domain subunit, and a third frequency domain subunit; or a 1^{st} frequency domain unit in the N frequency domain units includes a first frequency domain subunit and a third frequency domain subunit, and/or an N^{th} frequency domain unit in the N frequency domain units includes a second frequency domain subunit and a third frequency domain subunit, and each of a 2^{nd} frequency domain unit to an (N-1)^{th} frequency domain unit in the N frequency domain units includes a first frequency domain subunit, a second frequency domain subunit, and a third frequency domain subunit. Embodiments of this application provide a flexible resource pool structure, where a frequency domain subunit may be used to send sidelink information, and may also be used as a guard band. This improves flexibility of resource selection.

## Description

### CROSS-REFERENCE TO RELATED APPLICATIONS

This application claims priorities to Chinese Patent Application No. 202211209515.3, filed with the China National Intellectual Property Administration on September 30, 2022 and entitled "SIDELINK COMMUNICATION METHOD AND COMMUNICATION DEVICE", and to Chinese Patent Application No. 202211308278.6, filed with the China National Intellectual Property Administration on October 25, 2022 and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

In cellular communication, to reduce an uplink transmission delay, a subband full duplex (subband full duplex, SBFD) mode is being considered on a network device side in a current standard. An SBFD slot includes a downlink subband and an uplink subband, and the network device may simultaneously perform downlink sending and uplink receiving. Therefore, compared with a time division duplex (time division duplex, TDD) mode, the SBFD mode can reduce a transmission delay. However, due to a non-ideal feature of a device like a power amplifier (power amplifier, PA), transmission of the network device on the downlink subband may cause interference to receiving on the uplink subband, that is, self-interference exists. To reduce self-interference, a guard band (guard band, GB) may be configured between the downlink subband and the uplink subband.

In sidelink (sidelink, SL) communication, to meet a requirement for an ultra-low delay, the SBFD mode may also be considered on a user equipment (user equipment, UE) side. In this case, a GB also needs to be configured between subbands for simultaneous receiving and sending of an SBFD device (for example, UE), to reduce impact of self-interference. However, if a GB is configured directly in a manner of a cellular system, the SBFD device can perform sending or receiving only on a specific frequency domain resource, and a frequency domain resource configured as a GB cannot be used for sending or receiving. This limits flexibility of resource selection, and easily increases a conflict probability.

### SUMMARY

Embodiments of this application provide a communication method and apparatus, to improve flexibility of resource selection in SL communication.

According to a first aspect, a first communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a first terminal device. The method includes: determining, from a first resource pool, a first resource used to send sidelink information, where the first resource pool includes N frequency domain units, and N is a positive integer. Each of the N frequency domain units includes a first frequency domain subunit, a second frequency domain subunit, and a third frequency domain subunit; or a 1^{st} frequency domain unit in the N frequency domain units includes a second frequency domain subunit and a third frequency domain subunit, and/or an N^{th} frequency domain unit in the N frequency domain units includes a first frequency domain subunit and a third frequency domain subunit, and each of a 2^{nd} frequency domain unit to an (N-1)^{th} frequency domain unit in the N frequency domain units includes a first frequency domain subunit, a second frequency domain subunit, and a third frequency domain subunit; or a 1^{st} frequency domain unit in the N frequency domain units includes a third frequency domain subunit, and/or an N^{th} frequency domain unit in the N frequency domain units includes a third frequency domain subunit, and each of a 2^{nd} frequency domain unit to an (N-1)^{th} frequency domain unit in the N frequency domain units includes a first frequency domain subunit, a second frequency domain subunit, and a third frequency domain subunit.

**In** this embodiment of this application, the first resource pool is, for example, an SL resource pool. A frequency domain unit in the first resource pool may include a first frequency domain subunit and a second frequency domain subunit, or include a first frequency domain subunit, a second frequency domain subunit, and a third frequency domain subunit. A structure of the resource pool is flexible. A frequency domain subunit included in one frequency domain unit may be used to send sidelink information (for example, first sidelink information), or may be used as a guard band (for example, not occupied by sidelink information). Therefore, the first terminal device can flexibly select a resource used to send the sidelink information, thereby improving flexibility of resource selection. In addition, this manner can reduce impact of self-interference and a probability of a resource conflict.

In an optional implementation, the first frequency domain subunit is adjacent to the third frequency domain subunit, and the third frequency domain subunit is adjacent to the second frequency domain subunit. For example, a frequency of the first frequency domain subunit is lower than a frequency of the third frequency domain subunit, and the frequency of the third frequency domain subunit is lower than a frequency of the second frequency domain subunit. Alternatively, a frequency of the first frequency domain subunit is higher than a frequency of the third frequency domain subunit, and the frequency of the third frequency domain subunit is higher than a frequency of the second frequency domain subunit.

In an optional implementation, the method further includes: sending first sidelink information to a second terminal device on the first resource. After determining the first resource, the first terminal device may send the first sidelink information to the second terminal device on the first resource. Alternatively, the first terminal device may not send the first sidelink information, for example, the first resource is insufficient to send the first sidelink information. This is not specifically limited.

In an optional implementation, the method further includes: receiving configuration information, where the configuration information is used to configure the first resource pool. For example, the configuration information is configured by a higher layer of the first terminal device, or is configured by an access network device for the first terminal device, or is configured by another terminal device (for example, the second terminal device or another terminal device) for the first terminal device.

In an optional implementation, each of the N frequency domain units includes the first frequency domain subunit, the second frequency domain subunit, and the third frequency domain subunit, the first resource includes a part or all of frequency domain resources in M frequency domain units in the N frequency domain units, and M≥2. The first resource includes the second frequency domain subunit and the third frequency domain subunit in a 1^{st} frequency domain unit in the M frequency domain units; and/or the first resource includes the first frequency domain subunit and the third frequency domain subunit in an M^{th} frequency domain unit in the M frequency domain units. For example, if M=2, the N frequency domain units are two frequency domain units. In this case, the first resource may include the second frequency domain subunit and the third frequency domain subunit in the 1^{st} frequency domain unit. In addition, the first resource may further include the first frequency domain subunit, or the first frequency domain subunit may be used as a guard band and is not included in the first resource. In addition, the first resource may include the first frequency domain subunit and the third frequency domain subunit in the M^{th} frequency domain unit. In addition, the first resource may further include the second frequency domain subunit, or the second frequency domain subunit may be used as a guard band and is not included in the first resource.

In an optional implementation, M≥3, and the first resource includes the first frequency domain subunit, the second frequency domain subunit, and the third frequency domain subunit in each of a 2^{nd} frequency domain unit to an (M-1)^{th} frequency domain unit in the M frequency domain units. If M is greater than or equal to 3, it indicates that in addition to the 1^{st} frequency domain unit and the M^{th} frequency domain unit in the M frequency domain units, other frequency domain units are further included. These frequency domain units are not adjacent to other frequency domain units for sidelink transmission, and no guard band needs to be reserved. Therefore, the first resource may include all frequency domain subunits in these frequency domain units, to improve resource utilization.

In an optional implementation, each of the N frequency domain units includes the first frequency domain subunit, the second frequency domain subunit, and the third frequency domain subunit, and the first resource includes a part or all of a frequency domain resource in the M frequency domain units in the N frequency domain units. When the first terminal device uses a first duplex mode, the first resource includes the first frequency domain subunit, the second frequency domain subunit, and the third frequency domain subunit in the 1^{st} frequency domain unit in the M frequency domain units; and/or the first resource includes the first frequency domain subunit, the second frequency domain subunit, and the third frequency domain subunit in the M^{th} frequency domain unit in the M frequency domain units. If the first terminal device operates in the first duplex mode, it indicates that the first terminal device may perform only sending or receiving in a same slot, a sending process of the first terminal device may not cause interference to a receiving process of the first terminal device, and no guard band needs to be reserved between a sending resource and a receiving resource. Therefore, the first resource may include all frequency domain subunits in the M frequency domain units.

In an optional implementation, each of the N frequency domain units includes the first frequency domain subunit, the second frequency domain subunit, and the third frequency domain subunit, and the first resource includes a part or all of a frequency domain resource in the M frequency domain units in the N frequency domain units. When the first terminal device uses a second duplex mode, the first resource includes the second frequency domain subunit and the third frequency domain subunit in the 1^{st} frequency domain unit in the M frequency domain units, and does not include the first frequency domain subunit in the 1^{st} frequency domain unit in the M frequency domain units; and/or the first resource includes the first frequency domain subunit and the third frequency domain subunit in the M^{th} frequency domain unit in the M frequency domain units, and does not include the second frequency domain subunit in the M^{th} frequency domain unit in the M frequency domain units. If the first terminal device operates in the second duplex mode, it indicates that the first terminal device may perform both sending and receiving in a same slot. Therefore, a sending process of the first terminal device may cause interference to a receiving process of the first terminal device, and a guard band may be reserved between a sending resource and a receiving resource of the first terminal device. Therefore, the first resource may include a part or all of a frequency domain subunit in the M frequency domain units.

In an optional implementation, each of the N frequency domain units includes the first frequency domain subunit, the second frequency domain subunit, and the third frequency domain subunit, and the first resource includes a part or all of a frequency domain resource in the M frequency domain units in the N frequency domain units. When the first terminal device uses a first duplex mode, and the second terminal device uses the first duplex mode, the first resource includes the first frequency domain subunit, the second frequency domain subunit, and the third frequency domain subunit in the 1^{st} frequency domain unit in the M frequency domain units; and/or the first resource includes the first frequency domain subunit, the second frequency domain subunit, and the third frequency domain subunit in the M^{th} frequency domain unit in the M frequency domain units. If both the first terminal device and the second terminal device operate in the first duplex mode, it indicates that a sending process of the first terminal device may not cause interference to a receiving process of the first terminal device, a sending process of the second terminal device may not cause interference to a receiving process of the second terminal device, and no guard band needs to be reserved between a sending resource and a receiving resource of the first terminal device. Therefore, the first resource may include all frequency domain subunits in the M frequency domain units.

In an optional implementation, each of the N frequency domain units included in the first resource pool includes the first frequency domain subunit, the second frequency domain subunit, and the third frequency domain subunit, and the first resource includes a part or all of a frequency domain resource in the M frequency domain units in the N frequency domain units. When the first terminal device uses a first duplex mode, the second terminal device uses a second duplex mode, the second terminal device reserves a second resource in the first resource pool, and a time domain resource of the first resource is partially or completely the same as a time domain resource of the second resource, if the 1^{st} frequency domain unit in the M frequency domain units is adjacent to a frequency domain resource of the second resource, the first resource includes the third frequency domain subunit in the 1^{st} frequency domain unit in the M frequency domain units, and does not include the first frequency domain subunit or the second frequency domain subunit in the 1^{st} frequency domain unit in the M frequency domain units, or if the 1^{st} frequency domain unit in the M frequency domain units is not adjacent to a frequency domain resource of the second resource, the first resource includes the first frequency domain subunit, the second frequency domain subunit, and the third frequency domain subunit in the 1^{st} frequency domain unit in the M frequency domain units; and/or if the M^{th} frequency domain unit in the M frequency domain units is adjacent to the frequency domain resource of the second resource, the first resource includes the third frequency domain subunit in the M^{th} frequency domain unit in the M frequency domain units, and does not include the first frequency domain subunit or the second frequency domain subunit in the M^{th} frequency domain unit in the M frequency domain units, or if the M^{th} frequency domain unit in the M frequency domain units is not adjacent to the frequency domain resource of the second resource, the first resource includes the first frequency domain subunit, the second frequency domain subunit, and the third frequency domain subunit in the M^{th} frequency domain unit in the M frequency domain units. If the second terminal device uses the second duplex mode, and the second terminal device further reserves the second resource in addition to receiving first sidelink data from the first terminal device, it indicates that the second terminal device may further need to send sidelink data, and a sending process of the second terminal device may cause self-interference to a receiving process of the second terminal device. Therefore, if the frequency domain resource of the first resource is adjacent to the frequency domain resource of the second resource, the first terminal device may reserve a guard band in the first resource, to keep a spacing from the frequency domain resource of the second resource, thereby reducing impact of self-interference.

In an optional implementation, the second resource includes a part or all of a frequency domain resource in K frequency domain units in the first resource pool, and K is an integer greater than or equal to 0. The second resource includes the first frequency domain subunit in a 1^{st} frequency domain unit in the K frequency domain units; and/or the second resource includes the second frequency domain subunit in a K^{th} frequency domain unit in the K frequency domain units. In the foregoing description, if the frequency domain resource of the first resource is adjacent to the frequency domain resource of the second resource, the first terminal device may reserve the guard band in the first resource. Optionally, a prerequisite for the first terminal device to perform such processing is that the second terminal device does not reserve a guard band in the second resource. Optionally, if the second terminal device has reserved a guard band in the second resource, the first terminal device may reserve the guard band in the first resource in the foregoing manner, or the first terminal device may not reserve the guard band in the first resource. For example, the first resource may include all frequency domain subunits in the M frequency domain units.

In an optional implementation, each of the N frequency domain units included in the first resource pool includes the first frequency domain subunit, the second frequency domain subunit, and the third frequency domain subunit, and the first resource includes a part or all of a frequency domain resource in the M frequency domain units in the N frequency domain units. When the first terminal device uses a second duplex mode, the second terminal device uses a first duplex mode, the first terminal device further receives sidelink information on a third resource in the first resource pool, and a time domain resource of the first resource is partially or completely the same as a time domain resource of the third resource, if the 1^{st} frequency domain unit in the M frequency domain units is adjacent to a frequency domain resource of the third resource, the first resource includes the third frequency domain subunit in the 1^{st} frequency domain unit in the M frequency domain units, and does not include the first frequency domain subunit or the second frequency domain subunit in the 1^{st} frequency domain unit in the M frequency domain units, or if the 1^{st} frequency domain unit in the M frequency domain units is not adjacent to a frequency domain resource of the third resource, the first resource includes the first frequency domain subunit, the second frequency domain subunit, and the third frequency domain subunit in the 1^{st} frequency domain unit in the M frequency domain units; and/or if the M^{th} frequency domain unit in the M frequency domain units is adjacent to the frequency domain resource of the third resource, the first resource includes the third frequency domain subunit in the M^{th} frequency domain unit in the M frequency domain units, and does not include the first frequency domain subunit or the second frequency domain subunit in the M^{th} frequency domain unit in the M frequency domain units, or if the M^{th} frequency domain unit in the M frequency domain units is not adjacent to the frequency domain resource of the third resource, the first resource includes the first frequency domain subunit, the second frequency domain subunit, and the third frequency domain subunit in the M^{th} frequency domain unit in the M frequency domain units. If the first terminal device uses the second duplex mode, and the first terminal device further receives sidelink data on the third resource in addition to sending first sidelink data to the second terminal device, a sending process of the first terminal device may cause self-interference to a receiving process of the first terminal device. Therefore, if the frequency domain resource of the first resource is adjacent to the frequency domain resource of the third resource, the first terminal device may reserve a guard band in the first resource, to keep a spacing from the frequency domain resource of the third resource, thereby reducing impact of self-interference.

In an optional implementation, the third resource includes a part or all of a frequency domain resource in Q frequency domain units in the first resource pool, and Q is an integer greater than or equal to 0. The third resource includes the first frequency domain subunit in a 1^{st} frequency domain unit in the Q frequency domain units; and/or the third resource includes the second frequency domain subunit in a Q^{th} frequency domain unit in the Q frequency domain units. In the foregoing description, if the frequency domain resource of the first resource is adjacent to the frequency domain resource of the third resource, the first terminal device may reserve the guard band in the first resource. Optionally, a prerequisite for the first terminal device to perform such processing is that the first terminal device does not reserve a guard band in the third resource. Optionally, if the first terminal device has reserved a guard band in the third resource, the first terminal device may reserve the guard band in the first resource in the foregoing manner, or the first terminal device may not reserve the guard band in the first resource. For example, the first resource may include all frequency domain subunits in the M frequency domain units.

In an optional implementation, each of the N frequency domain units included in the first resource pool includes the first frequency domain subunit, the second frequency domain subunit, and the third frequency domain subunit, and the first resource includes a part or all of a frequency domain resource in the M frequency domain units in the N frequency domain units. When the first terminal device uses a second duplex mode, the second terminal device uses the second duplex mode, the first terminal device further receives sidelink information on a third resource in the first resource pool, a time domain resource of the first resource is partially or completely the same as a time domain resource of the third resource, and/or the second terminal device reserves a second resource in the first resource pool, and the time domain resource of the first resource is partially or completely the same as a time domain resource of the second resource, if the 1^{st} frequency domain unit in the M frequency domain units is adjacent to a frequency domain resource of the second resource, and/or the 1^{st} frequency domain unit in the M frequency domain units is adjacent to a frequency domain resource of the third resource, the first resource includes the third frequency domain subunit in the 1^{st} frequency domain unit in the M frequency domain units, and does not include the first frequency domain subunit or the second frequency domain subunit in the 1^{st} frequency domain unit in the M frequency domain units, or if the 1^{st} frequency domain unit in the M frequency domain units is adjacent to neither a frequency domain resource of the second resource nor a frequency domain resource of the third resource, the first resource includes the first frequency domain subunit, the second frequency domain subunit, and the third frequency domain subunit in the 1^{st} frequency domain unit in the M frequency domain units; and/or if the M^{th} frequency domain unit in the M frequency domain units is adjacent to the frequency domain resource of the second resource, and/or the M^{th} frequency domain unit in the M frequency domain units is adjacent to the frequency domain resource of the third resource, the first resource includes the third frequency domain subunit in the M^{th} frequency domain unit in the M frequency domain units, and does not include the first frequency domain subunit or the second frequency domain subunit in the M^{th} frequency domain unit in the M frequency domain units, or if the M^{th} frequency domain unit in the M frequency domain units is adjacent to neither the frequency domain resource of the second resource nor the frequency domain resource of the third resource, the first resource includes the first frequency domain subunit, the second frequency domain subunit, and the third frequency domain subunit in the M^{th} frequency domain unit in the M frequency domain units. For technical effect of this implementation, refer to the technical effect of the foregoing related implementations.

In an optional implementation, the first duplex mode is a time division duplex mode.

In an optional implementation, the second duplex mode is a subband full duplex mode, a subband non-overlapping full duplex mode, or a frequency division duplex mode.

In an optional implementation, when each of the N frequency domain units included in the first resource pool includes the first frequency domain subunit, the second frequency domain subunit, and the third frequency domain subunit, the method further includes: sending sidelink control information to the second terminal device, where the sidelink control information is carried on a sidelink control channel, the sidelink control channel is mapped to the third frequency domain subunit in at least one frequency domain unit, the first resource includes a part or all of a frequency domain resource in the M frequency domain units in the N frequency domain units, and the at least one frequency domain unit belongs to the M frequency domain units. If one of the M frequency domain units includes the first frequency domain subunit, the second frequency domain subunit, and the third frequency domain subunit, the first resource includes the third frequency domain subunit, but does not necessarily include the first frequency domain subunit and the second frequency domain subunit. Therefore, if the third frequency domain subunit may be configured to map the sidelink control channel, regardless of whether the first resource includes the first frequency domain subunit or the second frequency domain subunit, second UE only needs to detect the sidelink control channel in the third frequency domain subunit. This increases a receiving success rate of the sidelink control channel.

In an optional implementation, the at least one frequency domain unit is the 1^{st} frequency domain unit in the M frequency domain units. A quantity of at least one frequency domain unit is 1. For example, the frequency domain unit is the 1^{st} frequency domain unit in the M frequency domain units, or may be another frequency domain unit in the M frequency domain units. Alternatively, a quantity of at least one frequency domain unit may be greater than 1. A frequency domain unit included in the at least one frequency domain unit is not limited in embodiments of this application.

In an optional implementation, the sidelink control information indicates whether the first resource includes the first frequency domain subunit in the 1^{st} frequency domain unit in the M frequency domain units and/or whether the first resource includes the second frequency domain subunit in the M^{th} frequency domain unit in the M frequency domain units. The second terminal device can determine, based on an indication of the sidelink control information, the frequency domain subunit included in the first resource, so that the first sidelink information can be correctly decoded.

**In** an optional implementation, each of the N frequency domain units is a minimum frequency domain resource scheduling unit in the first resource pool. For example, when scheduling a frequency domain resource for the terminal device in the first resource pool, the access network device may perform scheduling in a unit of a frequency domain unit. Alternatively, when selecting a resource from the first resource pool, the terminal device may perform selection in a unit of a frequency domain unit.

According to a second aspect, a second communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a second terminal device. The method includes: receiving first sidelink information from a first terminal device on a first resource, where the first resource belongs to a first resource pool, the first resource pool includes N frequency domain units, and N is a positive integer. Each of the N frequency domain units includes a first frequency domain subunit, a second frequency domain subunit, and a third frequency domain subunit; or a 1^{st} frequency domain unit in the N frequency domain units includes a second frequency domain subunit and a third frequency domain subunit, and/or an N^{th} frequency domain unit in the N frequency domain units includes a first frequency domain subunit and a third frequency domain subunit, and each of a 2^{nd} frequency domain unit to an (N-1)^{th} frequency domain unit in the N frequency domain units includes a first frequency domain subunit, a second frequency domain subunit, and a third frequency domain subunit; or a 1^{st} frequency domain unit in the N frequency domain units includes a third frequency domain subunit, and/or an N^{th} frequency domain unit in the N frequency domain units includes a third frequency domain subunit, and each of a 2^{nd} frequency domain unit to an (N-1)^{th} frequency domain unit in the N frequency domain units includes a first frequency domain subunit, a second frequency domain subunit, and a third frequency domain subunit.

In an optional implementation, the first frequency domain subunit is adjacent to the third frequency domain subunit, and the third frequency domain subunit is adjacent to the second frequency domain subunit.

In an optional implementation, the method further includes: receiving configuration information, where the configuration information is used to configure the first resource pool.

In an optional implementation, each of the N frequency domain units included in the first resource pool includes the first frequency domain subunit, the second frequency domain subunit, and the third frequency domain subunit, the first resource includes a part or all of a frequency domain resource in M frequency domain units in the N frequency domain units, and M≥2. The first resource includes the second frequency domain subunit and the third frequency domain subunit in a 1^{st} frequency domain unit in the M frequency domain units; and/or the first resource includes the first frequency domain subunit and the third frequency domain subunit in an M^{th} frequency domain unit in the M frequency domain units.

In an optional implementation, M≥3, and the first resource includes the first frequency domain subunit, the second frequency domain subunit, and the third frequency domain subunit in each of a 2^{nd} frequency domain unit to an (M-1)^{th} frequency domain unit in the M frequency domain units.

In an optional implementation, when each of the N frequency domain units included in the first resource pool includes the first frequency domain subunit, the second frequency domain subunit, and the third frequency domain subunit, the method further includes: receiving sidelink control information from the first terminal device, where the sidelink control information is carried on a sidelink control channel, the sidelink control channel is mapped to the third frequency domain subunit in at least one frequency domain unit, the first resource includes a part or all of a frequency domain resource in the M frequency domain units in the N frequency domain units, and the at least one frequency domain unit belongs to the M frequency domain units.

In an optional implementation, the at least one frequency domain unit is the 1^{st} frequency domain unit in the M frequency domain units.

In an optional implementation, the method further includes: determining, based on the sidelink control information, whether the first resource includes the first frequency domain subunit in the 1^{st} frequency domain unit in the M frequency domain units and/or whether the first resource includes the second frequency domain subunit in the M^{th} frequency domain unit in the M frequency domain units.

In an optional implementation, each of the N frequency domain units is a minimum frequency domain resource scheduling unit in the first resource pool.

For technical effect brought by the second aspect or the optional implementations, refer to the descriptions of the technical effect of the first aspect or the corresponding implementations.

According to a third aspect, a third communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a first terminal device. The method includes: determining, from a first resource pool, a first resource used to send sidelink information, where the first resource pool includes a plurality of first-type frequency domain units and a plurality of second-type frequency domain units, and a bandwidth of the second-type frequency domain unit is less than a bandwidth of the first-type frequency domain unit. In the first resource pool, an i^{th} frequency domain unit is a first-type frequency domain unit, an (i+1)^{th} frequency domain unit is a second-type frequency domain unit, and i is a positive integer. Subcarriers in the first-type frequency domain unit included in the first resource pool are contiguous, and subcarriers in the second-type frequency domain unit included in the first resource pool are contiguous. The first resource includes M frequency domain units. The M frequency domain units include N first-type frequency domain units and K second-type frequency domain units, M is a positive integer, N is an integer greater than or equal to 0 and less than or equal to M, and K is an integer greater than or equal to 0 and less than or equal to M. In this embodiment of this application, frequency domain units are classified into different types. If the first terminal device needs to reserve a guard band, the second-type frequency domain unit may be reserved as a guard band as much as possible. The bandwidth of the second-type frequency domain unit is small, so that the guard band is reserved, impact of self-interference is reduced, and resources can be saved. The first-type frequency domain unit with a large bandwidth may be used as much as possible, to transmit the sidelink information. This improves resource utilization. In addition, the second-type frequency domain unit may be used as the guard band, or may be used to transmit the sidelink information. This avoids a resource waste caused by system-level guard band configuration, and also improves flexibility of resource selection.

In an optional implementation, the method further includes: sending first sidelink information to a second terminal device on the first resource. After determining the first resource, the first terminal device may send the first sidelink information to the second terminal device on the first resource. Alternatively, the first terminal device may not send the first sidelink information, for example, the first resource is insufficient to send the first sidelink information. This is not specifically limited.

In an optional implementation, the method further includes: receiving configuration information, where the configuration information is used to configure the first resource pool. For example, the configuration information is configured by a higher layer of the first terminal device, or is configured by an access network device for the first terminal device, or is configured by another terminal device (for example, the second terminal device or another terminal device) for the first terminal device.

In an optional implementation, that the bandwidth of the second-type frequency domain unit is less than the bandwidth of the first-type frequency domain unit includes: A quantity of frequency domain subunits included in the second-type frequency domain unit is less than a quantity of frequency domain subunits included in the first-type frequency domain unit. The frequency domain subunit is, for example, a subcarrier, a PRB, an RB, or an RE.

In an optional implementation, when the first terminal device uses a first duplex mode, and the second terminal device uses the first duplex mode, a type of a 1^{st} frequency domain unit in the M frequency domain units is a first type or a second type, and a type of an M^{th} frequency domain unit in the M frequency domain units is the first type or the second type. Both the first terminal device and the second terminal device operate in the first duplex mode. In the first duplex mode, only sending or only receiving is performed in a same slot, and there is no self-interference problem. Therefore, no guard band needs to be reserved, and types of the M frequency domain units may not be limited.

In an optional implementation, when the first terminal device uses a first duplex mode and the second terminal device uses a second duplex mode, or when the first terminal device uses a second duplex mode and the second terminal device uses a first duplex mode, or when the first terminal device uses a second duplex mode and the second terminal device uses the second duplex mode, a type of a 1^{st} frequency domain unit in the M frequency domain units is a first type, and a type of an M^{th} frequency domain unit in the M frequency domain units is the first type. If the first terminal device and/or the second terminal device operate/operates in the second duplex mode, a guard band may be reserved. If the types of the 1^{st} frequency domain unit and the M^{th} frequency domain unit are both the first type, there is at least one second-type frequency domain unit spaced between the 1^{st} frequency domain unit and a frequency domain unit adjacent to the 1^{st} frequency domain unit, and there is also at least one second-type frequency domain unit spaced between the M^{th} frequency domain unit and a frequency domain unit adjacent to the M^{th} frequency domain unit. Therefore, it can be ensured that at least one second-type frequency domain unit is spaced apart as a guard band between a transmit frequency domain unit and a receive frequency domain unit of the second terminal device.

In an optional implementation, when the first terminal device uses a first duplex mode, the second terminal device uses a second duplex mode, the second terminal device reserves a second resource in the first resource pool, and a time domain resource of the first resource is completely or partially the same as a time domain resource of the second resource, the M frequency domain units neither overlap nor are adjacent to a frequency domain resource of the second resource. If the second terminal device uses the second duplex mode, and the second terminal device further reserves the second resource in addition to receiving first sidelink data from the first terminal device, it indicates that the second terminal device may need to send sidelink data on the second resource, and a sending process of the second terminal device may cause self-interference to a receiving process of the second terminal device. Therefore, the first terminal device may make a frequency domain resource of the first resource not overlap the frequency domain resource of the second resource, thereby reducing a probability of a resource conflict. In addition, the first terminal device may make the frequency domain resource of the first resource not adjacent to the frequency domain resource of the second resource, so that a guard band is reserved between the frequency domain resource of the first resource and the frequency domain resource of the second resource, thereby reducing impact of self-interference.

In an optional implementation, when the first terminal device uses a second duplex mode, the second terminal device uses a first duplex mode, the first terminal device further receives third sidelink information on a third resource, and a time domain resource of the first resource is completely or partially the same as a time domain resource of the third resource, the M frequency domain units neither overlap nor are adjacent to a frequency domain resource of the third resource. If the first terminal device uses the second duplex mode, and the first terminal device further receives sidelink data on a second resource in addition to sending first sidelink data to the first terminal device, a sending process of the first terminal device may cause self-interference to a receiving process of the first terminal device. Therefore, the first terminal device may make a frequency domain resource of the first resource not overlap the frequency domain resource of the third resource, thereby reducing a probability of a resource conflict. In addition, the first terminal device may make the frequency domain resource of the first resource not adjacent to the frequency domain resource of the third resource, so that a guard band is reserved between the frequency domain resource of the first resource and the frequency domain resource of the third resource, thereby reducing impact of self-interference.

In an optional implementation, when the first terminal device uses a second duplex mode, the second terminal device uses the second duplex mode, the second terminal device reserves a second resource in the first resource pool, the first terminal device further receives sidelink information on a third resource in the first resource pool, a time domain resource of the first resource is completely or partially the same as a time domain resource of the second resource, and/or the time domain resource of the first resource is completely or partially the same as a time domain resource of the third resource, the M frequency domain units neither overlap nor are adjacent to a frequency domain resource of the second resource, and/or the M frequency domain units do not overlap and are not adjacent to a frequency domain resource of the third resource. For effect of this implementation, refer to the descriptions of the technical effect of the foregoing corresponding implementations.

In an optional implementation, the first duplex mode is a time division duplex mode.

In an optional implementation, the second duplex mode is a subband full duplex mode, a subband non-overlapping full duplex mode, or a frequency division duplex mode.

In an optional implementation, a quantity of frequency domain subunits that are in the second-type frequency domain unit and that may be used for a sidelink control channel is less than a quantity of frequency domain subunits that are in the first-type frequency domain unit and that may be used for a sidelink control channel. The frequency domain subunit is, for example, a subcarrier, a PRB, an RB, or an RE.

In an optional implementation, the method further includes: sending sidelink control information to the second terminal device on the first resource, where the sidelink control information is carried on a sidelink control channel, the sidelink control channel is mapped to at least one first-type frequency domain unit in the M frequency domain units, and N≥1. Because the second-type frequency domain unit includes a small quantity of frequency domain subunits, if the sidelink control channel is mapped to the second-type frequency domain unit, the sidelink control channel also occupies a small quantity of frequency domain subunits. To improve decoding performance of the sidelink control channel, the sidelink control channel mapped to the second-type frequency domain unit may occupy a large quantity of time domain resources. As a result, duration in which a receive end of the sidelink control channel decodes the sidelink control channel on the second-type frequency domain unit is greater than duration in which the receive end decodes the sidelink control channel on the first-type frequency domain unit. This is equivalent to increasing a processing delay. Therefore, if N is greater than or equal to 1, in this embodiment of this application, the sidelink control channel carrying the sidelink control information may be mapped to the at least one first-type frequency domain unit in the M frequency domain units. Because the first-type frequency domain unit includes a large quantity of frequency domain subunits, a large quantity of frequency domain subunits can be used to carry the sidelink control channel. This can improve decoding performance of the sidelink control channel, and can reduce a processing delay.

In an optional implementation, the at least one first-type frequency domain unit is a 1^{st} first-type frequency domain unit in the M frequency domain units. For example, a quantity of at least one first-type frequency domain unit is 1, and the frequency domain unit is a 1^{st} first-type frequency domain unit in the M frequency domain units, or the frequency domain unit may be any first-type frequency domain unit in the M frequency domain units. Alternatively, a quantity of at least one first-type frequency domain unit may be greater than 1, and the quantity, a location, and the like of the at least one first-type frequency domain unit are not limited.

In an optional implementation, the sidelink control information indicates that the type of the 1^{st} frequency domain unit in the M frequency domain units is the first type or the second type. The receive end of the sidelink control information (for example, the second terminal device) may determine the type of the 1^{st} frequency domain unit based on an indication of the sidelink control information, and therefore may determine the M frequency domain units.

According to a fourth aspect, a fourth communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a second terminal device. The method includes: receiving first sidelink information from a first terminal device on a first resource, where the first resource belongs to a first resource pool, the first resource pool includes a plurality of first-type frequency domain units and a plurality of second-type frequency domain units, and a bandwidth of the second-type frequency domain unit is less than a bandwidth of the first-type frequency domain unit. In the first resource pool, an i^{th} frequency domain unit is a first-type frequency domain unit, an (i+1)^{th} frequency domain unit is a second-type frequency domain unit, and i is a positive integer. Subcarriers in the first-type frequency domain unit included in the first resource pool are contiguous, and subcarriers in the second-type frequency domain unit are contiguous. The first resource includes M frequency domain units. The M frequency domain units include N first-type frequency domain units and K second-type frequency domain units, M is a positive integer, N is an integer greater than or equal to 0 and less than or equal to M, and K is an integer greater than or equal to 0 and less than or equal to M.

In an optional implementation, the method further includes: receiving configuration information, where the configuration information is used to configure the first resource pool.

In an optional implementation, that the bandwidth of the second-type frequency domain unit is less than the bandwidth of the first-type frequency domain unit includes: A quantity of subcarriers included in the second-type frequency domain unit is less than a quantity of subcarriers included in the first-type frequency domain unit.

In an optional implementation, a quantity of subcarriers that are in the second-type frequency domain unit and that may be used for a sidelink control channel is less than a quantity of subcarriers that are in the first-type frequency domain unit and that may be used for a sidelink control channel.

In an optional implementation, the method further includes: receiving sidelink control information from the first terminal device on the first resource, where the sidelink control information is carried on a sidelink control channel, the sidelink control channel is mapped to at least one first-type frequency domain unit in the M frequency domain units, and N≥1.

In an optional implementation, the at least one first-type frequency domain unit is a 1^{st} first-type frequency domain unit in the M frequency domain units.

In an optional implementation, the method further includes: determining, based on the sidelink control information, that a type of a 1^{st} frequency domain unit in the M frequency domain units is a first type or a second type.

For technical effect brought by the fourth aspect or the optional implementations, refer to descriptions of the technical effect of the third aspect or the corresponding implementations.

According to a fifth aspect, a communication apparatus is provided. The communication apparatus may be the first terminal device in any one of the first aspect to the fourth aspect. The communication apparatus has a function of the first terminal device. For example, the communication apparatus is the first terminal device, or a large device including the first terminal device, or a functional module in the first terminal device, for example, a baseband apparatus or a chip system. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. The transceiver unit may be referred to as a sending unit (also referred to as a sending module sometimes) when implementing the sending function, and the transceiver unit may be referred to as a receiving unit (also referred to as a receiving module sometimes) when implementing the receiving function. The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the processing unit is configured to determine, from a first resource pool, a first resource used to send sidelink information, where the first resource pool includes N frequency domain units, and N is a positive integer. Each of the N frequency domain units includes a first frequency domain subunit, a second frequency domain subunit, and a third frequency domain subunit; or a 1^{st} frequency domain unit in the N frequency domain units includes a first frequency domain subunit and a third frequency domain subunit, and/or an N^{th} frequency domain unit in the N frequency domain units includes a second frequency domain subunit and a third frequency domain subunit, and each of a 2^{nd} frequency domain unit to an (N-1)^{th} frequency domain unit in the N frequency domain units includes a first frequency domain subunit, a second frequency domain subunit, and a third frequency domain subunit.

In an optional implementation, the processing unit is configured to determine, from a first resource pool, a first resource used to send sidelink information, where the first resource pool includes a plurality of first-type frequency domain units and a plurality of second-type frequency domain units, and a bandwidth of the second-type frequency domain unit is less than a bandwidth of the first-type frequency domain unit. **In** the first resource pool, an i^{th} frequency domain unit is a first-type frequency domain unit, an (i+1)^{th} frequency domain unit is a second-type frequency domain unit, and i is a positive integer. Subcarriers in the first-type frequency domain unit included in the first resource pool are contiguous, and subcarriers in the second-type frequency domain unit included in the first resource pool are contiguous. The first resource includes M frequency domain units. The M frequency domain units include N first-type frequency domain units and K second-type frequency domain units, M is a positive integer, N is an integer greater than or equal to 0 and less than or equal to M, and K is an integer greater than or equal to 0 and less than or equal to M.

**In** an optional implementation, the communication apparatus further includes a storage unit (also referred to as a storage module sometimes). The processing unit is configured to: be coupled to the storage unit, and execute a program or instructions in the storage unit, to enable the communication apparatus to perform a function of the first terminal device in any one of the first aspect to the fourth aspect.

According to a sixth aspect, a communication apparatus is provided. The communication apparatus may be the second terminal device in any one of the first aspect to the fourth aspect. The communication apparatus has a function of the second terminal device. For example, the communication apparatus is the second terminal device, a large device including the second terminal device, or a functional module in the second terminal device, for example, a baseband apparatus or a chip system. **In** an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the descriptions in the seventh aspect.

In an optional implementation, the transceiver unit (or a receiving unit) is configured to receive first sidelink information from a first terminal device on a first resource, where the first resource belongs to a first resource pool, the first resource pool includes N frequency domain units, and N is a positive integer. Each of the N frequency domain units includes a first frequency domain subunit, a second frequency domain subunit, and a third frequency domain subunit; or a 1^{st} frequency domain unit in the N frequency domain units includes a first frequency domain subunit and a third frequency domain subunit, and/or an N^{th} frequency domain unit in the N frequency domain units includes a second frequency domain subunit and a third frequency domain subunit, and each of a 2^{nd} frequency domain unit to an (N-1)^{th} frequency domain unit in the N frequency domain units includes a first frequency domain subunit, a second frequency domain subunit, and a third frequency domain subunit.

In an optional implementation, the transceiver unit (or a receiving unit) is configured to receive first sidelink information from a first terminal device on a first resource, where the first resource belongs to a first resource pool, the first resource pool includes a plurality of first-type frequency domain units and a plurality of second-type frequency domain units, and a bandwidth of the second-type frequency domain unit is less than a bandwidth of the first-type frequency domain unit. In the first resource pool, an i^{th} frequency domain unit is a first-type frequency domain unit, an (i+1)^{th} frequency domain unit is a second-type frequency domain unit, and i is a positive integer. Subcarriers in the first-type frequency domain unit included in the first resource pool are contiguous, and subcarriers in the second-type frequency domain unit included in the first resource pool are contiguous. The first resource includes M frequency domain units. The M frequency domain units include N first-type frequency domain units and K second-type frequency domain units, M is a positive integer, N is an integer greater than or equal to 0 and less than or equal to M, and K is an integer greater than or equal to 0 and less than or equal to M.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform a function of the second terminal device in any one of the first aspect to the fourth aspect.

According to a seventh aspect, a communication apparatus is provided. The communication apparatus may be a first terminal device, or a chip or a chip system used in the first terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first terminal device in the foregoing aspects.

According to an eighth aspect, a communication apparatus is provided. The communication apparatus may be a second terminal device, or a chip or a chip system used in the second terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the second terminal device in the foregoing aspects.

According to a ninth aspect, a communication system is provided, including a first terminal device and a second terminal device. The first terminal device is configured to perform the method performed by the first terminal device in any one of the first aspect to the fourth aspect, and the second terminal device is configured to perform the method performed by the second terminal device in any one of the first aspect to the fourth aspect. For example, the first terminal device may be implemented by the communication apparatus in the fifth aspect or the seventh aspect, and the second terminal device may be implemented by the communication apparatus in the sixth aspect or the eighth aspect.

According to a tenth aspect, a computer-readable storage medium is provided. The computer-readable storage medium is configured to store a computer program or instructions. When the computer program or the instructions are run, the method performed by the first terminal device or the second terminal device in the foregoing aspects is implemented.

According to an eleventh aspect, a computer program product including instructions is provided. When the computer program product runs on a computer, the methods in the foregoing aspects are implemented.

According to a twelfth aspect, a chip system is provided. The chip system includes a processor and an interface. The processor is configured to invoke instructions from the interface and run the instructions, so that the chip system implements the methods in the foregoing aspects.

### BRIEF DESCRIPTION OF DRAWINGS

FIG. 1 is a diagram of a GB in cellular communication;
FIG. 2 is a diagram of a communication network architecture to which an embodiment of this application is applied;
FIG. 3 is a flowchart of a communication method according to an embodiment of this application;
FIG. 4A to FIG. 4C are diagrams of several structures of a frequency domain unit according to an embodiment of this application;
FIG. 5 is a flowchart of another communication method according to an embodiment of this application;
FIG. 6 is a diagram of distribution of two types of frequency domain units included in a first resource pool according to an embodiment of this application;
FIG. 7 is a diagram of content indicated by sidelink control information according to an embodiment of this application;
FIG. 8 is a diagram of an apparatus according to an embodiment of this application; and
FIG. 9 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to accompanying drawings.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. A character "/" generally indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one item (piece) of a, b, or c indicates a, b, c, a and b, a and c, b and c, or a, b, and c, where a, b, and c may be singular or plural.

Ordinal numbers such as "first" and "second" in embodiments of this application are intended to distinguish between a plurality of objects, but are not intended to limit sizes, content, an order, a time sequence, priorities, importance degrees, or the like of the plurality of objects. In addition, step numbers in embodiments described in this application are merely intended to distinguish between different steps, but are not intended to limit a sequence of the steps. For example, S301 may be performed before S302, may be performed after S302, or may be performed at the same time with S302.

The following describes some terms or concepts in embodiments of this application, to facilitate understanding of a person skilled in the art.

In embodiments of this application, a terminal device is a device with a wireless transceiver function, and may be a stationary device, a mobile device, a handheld device (for example, a mobile phone), a wearable device, a vehicle-mounted device, or a built-in wireless apparatus (for example, a communication module, a modem, or a chip system) of the foregoing device. The terminal device is configured to connect people, things, machines, and the like, and may be widely used in various scenarios, for example, including but not limited to the following scenarios: cellular communication, device-to-device communication (device-to-device, D2D), vehicle to everything (vehicle to everything, V2X), machine-to-machine/machine-type communication (machine-to machine/machine-type communication, M2M/MTC), an internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, a smart office, a smart wearable, smart transportation, a smart city (smart city), an uncrewed aerial vehicle, and a robot. The terminal device may be sometimes referred to as UE, a terminal, an access station, a UE station, a remote station, a wireless communication device, a user apparatus, or the like. For ease of description, an example in which the terminal device is UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a base station that is subsequently evolved in the 3rd generation partnership project (3rd generation partnership project, 3GPP), an access node in a wireless fidelity (wireless fidelity, Wi-Fi) system, a wireless relay node, a wireless backhaul node, or the like. The base station may be a macro base station, a micro base station, a picocell base station, a small cell, a relay station, or the like. A plurality of base stations may support networks of a same access technology, or may support networks of different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a V2X technology may be a road side unit (road side unit, RSU). The following provides descriptions by using an example in which the access network device is a base station. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments this application. A 5th generation (the 5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be mounted in the network device. In the technical solutions provided in embodiments of this application, an example in which the apparatus configured to implement the function of the network device is a network device is used to describe the technical solutions provided in embodiments of this application.

The technical solutions provided in embodiments of this application may be applied to a 4th generation (the 4th generation, 4G) mobile communication technology system such as a long term evolution (long term evolution, LTE) system, or may be applied to a 5G system such as a 5G new radio (new radio, NR) system, or may be applied to a next generation mobile communication system or another similar communication system such as a 6th generation (the 6th generation, 6G) mobile communication technology system. This is not specifically limited. In addition, the technical solutions in embodiments of this application may be applied to a device-to-device (device-to-device, D2D) scenario, for example, an NR-D2D scenario, or may be applied to the vehicle-to-everything (vehicle-to-everything, V2X) scenario, for example, an NR-V2X scenario. For example, the technical solutions may be applied to an internet of vehicles, for example, V2X, or may be applied to the field such as intelligent driving, assisted driving, or intelligent connected vehicles.

The following describes technical features in embodiments of this application.

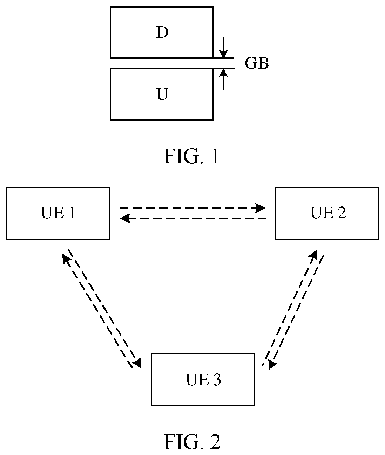

In cellular communication, to reduce an uplink transmission delay, an SBFD mode is being discussed in 5G new radio (new radio, NR). The SBFD mode may be referred to as a subband full duplex mode, or may be referred to as a subband non-overlapping full duplex mode. As shown in FIG. 1, an SBFD slot may include one or more downlink subbands (D) and one or more uplink subbands (U). The downlink subband is used by a network device to send information to UE, and the uplink subband is used by the UE to send information to the network device. In addition, the network device may simultaneously perform downlink sending and uplink receiving in the SBFD slot. Therefore, compared with a TDD mode, the SBFD mode can reduce a transmission delay.

Due to a non-ideal feature of a device such as a PA, when the network device simultaneously performs downlink sending and uplink receiving in the SBFD slot, transmission of the network device on the downlink subband causes interference to receiving on the uplink subband, that is, self-interference exists. To reduce self-interference, as shown in FIG. 1, a GB may be configured between the downlink subband and the uplink subband. For example, a GB with a size of about five physical resource blocks (physical resource blocks, PRBs) may be configured, so that the self-interference can be suppressed by about 45 dB.

In existing SL communication, all devices use the TDD mode, resulting in a half-duplex problem. To be specific, the UE can perform only sending or receiving in a same slot, but cannot simultaneously perform sending and receiving. In an application scenario that has extremely high requirements for a delay and reliability, such as the industrial Internet, one device may need to perform a plurality of receiving and sending operations within an extremely short time, and it is difficult for the TDD mode to meet a requirement for an ultra-low delay. Therefore, in SL communication, to meet the requirement for the ultra-low delay, the SBFD mode may also be considered on a UE side. In this case, a GB also needs to be configured between subbands for simultaneous receiving and sending of an SBFD device (for example, UE), to reduce impact of self-interference. However, if a GB is configured directly in a manner of a cellular system, the SBFD device can perform sending or receiving only on a specific frequency domain resource, and a frequency domain resource configured as a GB cannot be used for sending or receiving. This limits flexibility of resource selection, and easily increases a conflict probability.

In view of this, the technical solutions in embodiments of this application are provided. In this embodiment of this application, a first resource pool is, for example, an SL resource pool. A frequency domain unit in the first resource pool may include a first frequency domain subunit and a second frequency domain subunit, or include a first frequency domain subunit, a second frequency domain subunit, and a third frequency domain subunit. A structure of the resource pool is flexible. A frequency domain subunit included in one frequency domain unit may be used to send sidelink information (for example, first sidelink information), or may be used as a guard band (for example, not occupied by sidelink information). Therefore, first UE can flexibly select a resource used to send the sidelink information, thereby improving flexibility of resource selection. In addition, this manner can reduce impact of self-interference and a probability of a resource conflict.

In embodiments of this application, an SL may be referred to as a "sidelink". For example, SL information may be referred to as sidelink information, and SL data may be referred to as sidelink data. Alternatively, an SL may be briefly referred to as a"sidelink". For example, SL information may be briefly referred to as sidelink information, and SL data may be briefly referred to as sidelink data. This is used as an example below.

In embodiments of this application, the frequency domain unit is, for example, a subband or a subchannel. Optionally, the frequency domain unit in embodiments of this application is a minimum frequency domain resource scheduling unit in the SL resource pool (for example, the first resource pool to be described below). For example, during resource scheduling, a frequency domain unit is used as a unit for scheduling. A time domain unit is, for example, a subframe (subframe), a slot (slot), a mini-slot (mini-slot), or an orthogonal frequency division multiplexing (orthogonal frequency division multiplexing, OFDM) symbol (symbol).

FIG. 2 shows a communication network architecture to which an embodiment of this application is applicable. UE 1 and UE 2 perform SL communication. The UE 1 may send SL information to another UE (for example, the UE 2, UE 3, or one or more UEs in other UEs that are not shown in FIG. 2), and the UE 1 may also receive SL information from another UE (for example, the UE 2, the UE 3, or the one or more UEs in the other UEs that are not shown in FIG. 2). This is similar to implementations of the UE 2 and the UE 3. The UE 2 and the UE 3 may send SL information, and may also receive SL information. The UEs may send the SL information in a first duplex mode, and may also send the SL information in a second duplex mode. In embodiments of this application, for example, the first duplex mode is a mode in which receiving and sending cannot be simultaneously performed in a same resource pool, for example, a TDD mode; and for example, the second duplex mode is a mode in which receiving and sending can be simultaneously performed on different frequency domain units in a same resource pool, for example, an SBFD mode or a frequency division duplex (frequency division duplex, FDD) mode.

To better describe embodiments of this application, the following describes methods provided in embodiments of this application with reference to accompanying drawings. Unless otherwise specified below, in accompanying drawings corresponding to embodiments of this application, steps represented by dashed lines are all optional steps. The methods provided in embodiments of this application may be applied to the network architecture shown in FIG. 2. For example, first UE in the method provided in each embodiment of this application may be the UE 1 in FIG. 2, second UE in the method provided in each embodiment of this application may be the UE 2 in FIG. 2, and another UE in the method provided in each embodiment of this application may be the UE 3 in FIG. 2 or the UE not shown in FIG. 2.

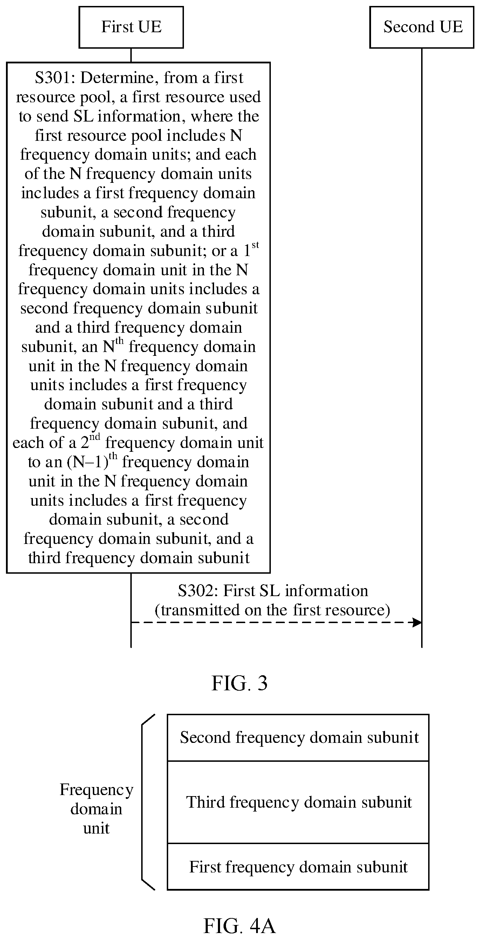

A communication method provided in an embodiment of this application is first described. FIG. 3 is a flowchart of the method.

S301: First UE determines, from a first resource pool, a first resource used to send SL information. For example, if the first UE is to send first SL information, the first UE may determine, from the first resource pool, a resource used to send the first SL information, where the resource determined by the first UE is referred to as the first resource. In this embodiment of this application, the SL information includes, for example, one or more of SL data, an SL reference signal, or SL control information. This is not specifically limited.

The first resource pool is an SL resource pool. For example, the first UE operates in a mode (mode) 1 or a mode (mode) 2. The first resource pool may be an SL resource pool preconfigured in the first UE. For example, the first UE is preconfigured before delivery. Alternatively, the first resource pool may be an SL resource pool configured by the first UE. Alternatively, the first resource pool may be an SL resource pool configured by a network device or another UE for the first UE. For example, the network device may send configuration information to the first UE, and the configuration information may be used to configure the first resource pool. The configuration information may be sent to the first UE through a direct path between the network device and the first UE, or may be sent to the first UE through an indirect path between the network device and the first UE. For example, the first UE may receive the configuration information forwarded by a relay UE. For another example, another UE (for example, second UE or UE other than the second UE) may send configuration information to the first UE, to configure the first resource pool. Optionally, a process of configuring the first resource pool may be performed before S301. Alternatively, the first resource pool may be an SL resource pool configured by using upper layer signaling of the first UE. For example, the upper layer signaling of the first UE is radio resource control (radio resource control, RRC) signaling. The first resource pool may include one or more time domain units, and may further include a frequency domain unit. For example, the first resource pool includes N frequency domain units, where N is a positive integer.

Optionally, each of the N frequency domain units included in the first resource pool may include a first frequency domain subunit, a second frequency domain subunit, and a third frequency domain subunit. The first frequency domain subunit is adjacent to the third frequency domain subunit, and the third frequency domain subunit is adjacent to the second frequency domain subunit. For example, in one frequency domain unit, the third frequency domain subunit is located between the first frequency domain subunit and the second frequency domain subunit. FIG. 4A is a diagram of a first frequency domain subunit, a second frequency domain subunit, and a third frequency domain subunit that are included in one frequency domain unit. In addition, in FIG. 4A, for example, a quantity of PRBs included in the first frequency domain subunit is the same as a quantity of PRBs included in the second frequency domain subunit. This is not limited thereto in practice. In this embodiment of this application, a frequency domain subunit is, for example, a PRB set (set), a resource block (resource block, RB) set, a subcarrier set, or a resource element (resource element, RE) set in a frequency domain unit. For example, the first frequency domain subunit, the second frequency domain subunit, and the third frequency domain subunit in one frequency domain unit are three PRB sets, three RB sets, three subcarrier sets, three RE sets, or the like included in the frequency domain unit.

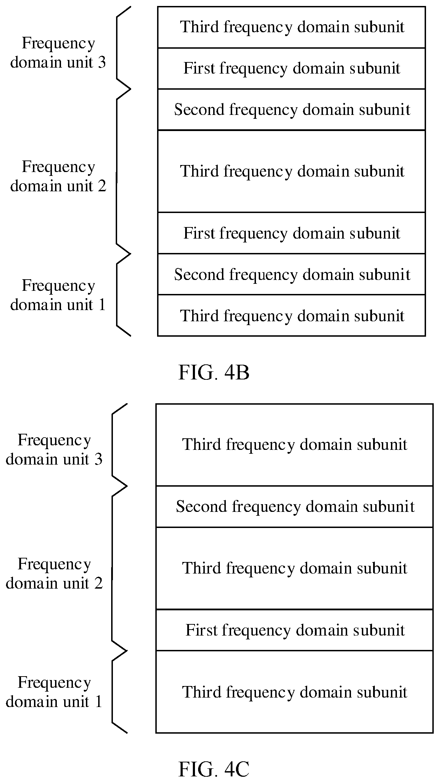

Alternatively, each of a 2^{nd} frequency domain unit to an (N-1)^{th} frequency domain unit in the N frequency domain units included in the first resource pool may include a first frequency domain subunit, a second frequency domain subunit, and a third frequency domain subunit. In addition, a 1^{st} frequency domain unit in the N frequency domain units may include a second frequency domain subunit and a third frequency domain subunit, but does not include a first frequency domain subunit; and/or an N^{th} frequency domain unit in the N frequency domain units may include a first frequency domain subunit and a third frequency domain subunit, but does not include a second frequency domain subunit. For example, as shown in FIG. 4B, N=3 is used as an example. A frequency domain unit 1 is the 1^{st} frequency domain unit in the N frequency domain units, and a frequency domain unit 3 is the N^{th} frequency domain unit in the N frequency domain units.

Alternatively, each of a 2^{nd} frequency domain unit to an (N-1)^{th} frequency domain unit in the N frequency domain units included in the first resource pool may include a first frequency domain subunit, a second frequency domain subunit, and a third frequency domain subunit. In addition, a 1^{st} frequency domain unit in the N frequency domain units may include a third frequency domain subunit, but does not include a first frequency domain subunit and a second frequency domain subunit; and/or an N^{th} frequency domain unit in the N frequency domain units may include a third frequency domain subunit, but does not include a first frequency domain subunit and a second frequency domain subunit. For example, as shown in FIG. 4C, N=3 is used as an example. A frequency domain unit 1 is the 1^{st} frequency domain unit in the N frequency domain units, and a frequency domain unit 3 is the N^{th} frequency domain unit in the N frequency domain units.

In FIG. 4A to FIG. 4C, the first frequency domain subunit is located at the bottom of one frequency domain unit (it may be understood that the frequency domain unit 1 in FIG. 4B does not include the first frequency domain subunit, and therefore the third frequency domain subunit is located at the bottom of the frequency domain unit 1), and the second frequency domain subunit is located at the top of one frequency domain unit (it may be understood that the frequency domain unit 3 in FIG. 4B does not include the second frequency domain subunit, and therefore the third frequency domain subunit is located at the top of the frequency domain unit 3). The 1^{st} frequency domain unit in the N frequency domain units is located at the bottom of the first resource pool, and the N^{th} frequency domain unit in the N frequency domain units is located at the top of the first resource pool. For example, a frequency of the first frequency domain subunit is lower than a frequency of the second frequency domain subunit, and a frequency of the bottom frequency domain unit in the first resource pool is lower than a frequency of the top frequency domain unit in the first resource pool (in other words, in the first resource pool, frequencies of frequency domain units from the bottom frequency domain unit to the top frequency domain unit increase sequentially, or indexes of PRBs increase sequentially, or indexes of RBs increase sequentially, or indexes of REs increase sequentially). This is used as an example in embodiments of this application. Alternatively, the 1^{st} frequency domain unit in the N frequency domain units may be located at the top of the first resource pool, and the N^{th} frequency domain unit in the N frequency domain units is located at the bottom of the first resource pool. For example, a frequency of the first frequency domain subunit is higher than a frequency of the second frequency domain subunit. However, in embodiments of this application, an example in which the 1^{st} frequency domain unit in the N frequency domain units is located at the bottom of the first resource pool, and the N^{th} frequency domain unit in the N frequency domain units is located at the top of the first resource pool is used.

For example, for a frequency domain unit that is not located at an edge of the first resource pool, there may be adjacent frequency domain units on two sides (a high-frequency side and a low-frequency side) of the frequency domain unit. Therefore, the frequency domain unit may include a first frequency domain subunit, a second frequency domain subunit, and a third frequency domain subunit. In this way, the first frequency domain subunit may be used as a GB on the low-frequency side of the frequency domain unit, and the second frequency domain subunit may be used as a GB on the high-frequency side of the frequency domain unit.

For another example, a frequency domain unit that is located at an edge of the first resource pool may include a first frequency domain subunit, a second frequency domain subunit, and a third frequency domain subunit. Alternatively, because the frequency domain unit is located at the edge of the first resource pool, there may be no adjacent frequency domain unit on one side (a high-frequency side or a low-frequency side) of the frequency domain unit, and no GB may need to be reserved on the side. Therefore, the frequency domain unit may include the first frequency domain subunit and the third frequency domain subunit, but does not include the second frequency domain subunit. Optionally, the first frequency domain subunit may be used as a GB. Alternatively, the frequency domain unit may include the second frequency domain subunit and the third frequency domain subunit, but does not include the first frequency domain subunit. Optionally, the second frequency domain subunit may be used as a GB.

If a frequency of a frequency domain unit is located at an edge of a frequency band occupied by the first resource pool, it indicates that the frequency domain unit is located at the edge of the first resource pool.

In one frequency domain unit, a first frequency domain subunit may include one or more PRBs, a second frequency domain subunit may include one or more PRBs, and a third frequency domain subunit may include one or more PRBs. Quantities of PRBs included in the three frequency domain subunits may be the same, or may be different from each other, or quantities of PRBs included in any two of the frequency domain subunits may be the same. Quantities of PRBs included in first frequency domain subunits included in different frequency domain units may be the same or different, quantities of PRBs included in second frequency domain subunits included in different frequency domain units may be the same or different, and quantities of PRBs included in third frequency domain subunits included in different frequency domain units may be the same or different. For example, in FIG. 4A and FIG. 4B, an example in which a quantity of PRBs included in the first frequency domain subunit is the same as a quantity of PRBs included in the second frequency domain subunit, and a quantity of PRBs included in the third frequency domain subunit is greater than the quantity of PRBs included in the first frequency domain subunit is used. This is not limited thereto in practice. Optionally, a quantity of PRBs included in one frequency domain unit and a quantity of PRBs included in one frequency domain subunit may be configured by the network device or another UE, for example, configured by the network device or another UE when the first resource pool is configured. Alternatively, a quantity of PRBs included in one frequency domain unit and a quantity of PRBs included in one frequency domain subunit may be configured by using the upper layer signaling of the first UE.

The first UE selects the first resource from the first resource pool to send the first SL information. For example, the first resource may include a part or all of a frequency domain resource in M frequency domain units in the N frequency domain units, or the first resource may include a part or all of a frequency domain subunit in M frequency domain units in the N frequency domain units. It may be understood that, that the first resource includes one frequency domain subunit may also be understood as that the first SL information occupies the frequency domain subunit, or that the first resource does not include one frequency domain subunit may be understood as that the first SL information does not occupy the frequency domain subunit. Therefore, in this embodiment of this application, whether the first resource includes the frequency domain subunit is used for description. If the first SL information does not occupy a frequency domain subunit in one frequency domain unit, or the first resource does not include a frequency domain subunit in one frequency domain unit, it indicates that the frequency domain subunit is reserved as a GB.

For example, if M=1, and the frequency domain unit includes the first frequency domain subunit and the third frequency domain subunit, but does not include the second frequency domain subunit, the first resource may include the first frequency domain subunit and/or the third frequency domain subunit in the frequency domain unit; or if the frequency domain unit includes the second frequency domain subunit and the third frequency domain subunit, but does not include the first frequency domain subunit, the first resource may include the second frequency domain subunit and/or the third frequency domain subunit in the frequency domain unit. Alternatively, if M=1, and the frequency domain unit includes the third frequency domain subunit, but does not include the first frequency domain subunit and the second frequency domain subunit, the first resource may include the third frequency domain subunit in the frequency domain unit. Alternatively, if M=1, and the frequency domain unit includes the first frequency domain subunit, the second frequency domain subunit, and the third frequency domain subunit, the first resource may include the third frequency domain subunit in the frequency domain unit, and the first resource may further include the first frequency domain subunit and/or the second frequency domain subunit in the frequency domain unit; or the first resource may include the third frequency domain subunit in the frequency domain unit, but does not include the first frequency domain subunit and the second frequency domain subunit in the frequency domain unit. That is, if M=1, the first resource may include all frequency domain subunits in the frequency domain unit, or does not include a frequency domain subunit that is in the frequency domain unit and that is adjacent to another frequency domain unit, where the frequency domain subunit that is not included in the first resource may be reserved as a GB.

For another example, if a 1^{st} frequency domain unit in the M frequency domain units includes the first frequency domain subunit, the second frequency domain subunit, and the third frequency domain subunit, the first resource may include the second frequency domain subunit and the third frequency domain subunit in the 1^{st} frequency domain unit, and may or may not include the first frequency domain subunit in the 1^{st} frequency domain unit. Alternatively, if a 1^{st} frequency domain unit in the M frequency domain units includes the second frequency domain subunit and the third frequency domain subunit, but does not include the first frequency domain subunit, the 1^{st} frequency domain unit may be located at the bottom of the first resource pool, and no signal may be received or sent on a frequency domain unit adjacent to the third frequency domain subunit in the 1^{st} frequency domain unit (the adjacent frequency domain unit may be a spacing between different resource pools). Therefore, the first resource may include the third frequency domain subunit in the 1^{st} frequency domain unit, and may or may not include the second frequency domain subunit in the 1^{st} frequency domain unit. Alternatively, if a 1^{st} frequency domain unit in the M frequency domain units includes the third frequency domain subunit, but does not include the first frequency domain subunit and the second frequency domain subunit, the 1^{st} frequency domain unit includes only one frequency domain subunit. Therefore, the first resource may include the third frequency domain subunit in the 1^{st} frequency domain unit. If an M^{th} frequency domain unit in the M frequency domain units includes the first frequency domain subunit, the second frequency domain subunit, and the third frequency domain subunit, the first resource may include the first frequency domain subunit and the third frequency domain subunit in the M^{th} frequency domain unit, and may or may not include the second frequency domain subunit in the M^{th} frequency domain unit. Alternatively, if an M^{th} frequency domain unit in the M frequency domain units includes the first frequency domain subunit and the third frequency domain subunit, but does not include the second frequency domain subunit, the 1^{st} frequency domain unit may be located at the top of the first resource pool, and no signal may be received or sent on a frequency domain unit adjacent to the third frequency domain subunit in the M^{th} frequency domain unit (the adjacent frequency domain unit may be a spacing between different resource pools). Therefore, the first resource may include the third frequency domain subunit in the M^{th} frequency domain unit, and the first frequency domain subunit may or may not be occupied. Alternatively, if an M^{th} frequency domain unit in the M frequency domain units includes the third frequency domain subunit, but does not include the first frequency domain subunit and the second frequency domain subunit, the M^{th} frequency domain unit includes only one frequency domain subunit. Therefore, the first resource may include the third frequency domain subunit in the M^{th} frequency domain unit. For example, that a frequency of the 1^{st} frequency domain unit in the M frequency domain units is lower than a frequency of the M^{th} frequency domain unit may be understood as that frequencies of the 1^{st} frequency domain unit to the M^{th} frequency domain unit in the M frequency domain units increase sequentially. In addition, if M is greater than or equal to 3, and each of a 2^{nd} frequency domain unit to an (M-1)^{th} frequency domain unit in the M frequency domain units may include the first frequency domain subunit, the second frequency domain subunit, and the third frequency domain subunit, the first resource may include the first frequency domain subunit, the second frequency domain subunit, and the third frequency domain subunit in each of the 2^{nd} frequency domain unit to the (M-1)^{th} frequency domain unit. In other words, if M is greater than or equal to 3, the first resource may include all frequency domain subunits in an intermediate frequency domain unit, and for frequency domain units on two sides, the first resource may include all frequency domain subunits in these frequency domain units, or may not include frequency domain subunits that are in these frequency domain units and that are adjacent to another frequency domain unit.

Which frequency domain subunits in the frequency domain unit are included in the first resource if M=1, or which frequency domain subunits in the 1^{st} frequency domain unit and the M^{th} frequency domain unit are included in the first resource if M is greater than 1 may be determined based on different factors. The following provides descriptions by using examples. In the following description, a value of M is not distinguished. It may be understood that if M=1, the 1^{st} frequency domain unit and the M^{th} frequency domain unit in the M frequency domain units are a same frequency domain unit.
1. A frequency domain subunit included in the first resource is determined based on an operating mode of the first UE.

When the first UE sends the first SL information in a first duplex mode, in other words, the first UE operates in the first duplex mode, if the 1^{st} frequency domain unit in the M frequency domain units includes the first frequency domain subunit, the second frequency domain subunit, and the third frequency domain subunit, the first resource may include the first frequency domain subunit, the second frequency domain subunit, and the third frequency domain subunit in the 1^{st} frequency domain unit, or if the 1^{st} frequency domain unit in the M frequency domain units includes the second frequency domain subunit and the third frequency domain subunit, but does not include the first frequency domain subunit, the first resource may include the second frequency domain subunit and the third frequency domain subunit in the 1^{st} frequency domain unit, or if the 1^{st} frequency domain unit in the M frequency domain units includes the third frequency domain subunit, but does not include the first frequency domain subunit and the second frequency domain subunit, the first resource may include the third frequency domain subunit in the 1^{st} frequency domain unit; and/or if the M^{th} frequency domain unit in the M frequency domain units includes the first frequency domain subunit, the second frequency domain subunit, and the third frequency domain subunit, the first resource may include the first frequency domain subunit, the second frequency domain subunit, and the third frequency domain subunit in the M^{th} frequency domain unit, or if the M^{th} frequency domain unit in the M frequency domain units includes the first frequency domain subunit and the third frequency domain subunit, but does not include the second frequency domain subunit, the first resource may include the first frequency domain subunit and the third frequency domain subunit in the M^{th} frequency domain unit, or if the M^{th} frequency domain unit in the M frequency domain units includes the third frequency domain subunit, but does not include the first frequency domain subunit and the second frequency domain subunit, the first resource may include the third frequency domain subunit in the M^{th} frequency domain unit.

It may be understood that, when the first UE operates in the first duplex mode, it indicates that the first UE may perform only sending or receiving in a same slot, a sending process of the first UE may not cause interference to a receiving process of the first UE, and no GB needs to be reserved between a sending resource and a receiving resource. Therefore, the first resource may include all frequency domain subunits in the M frequency domain units.

When the first UE sends the first SL information in a second duplex mode, in other words, the first UE operates in the second duplex mode, if the 1^{st} frequency domain unit in the M frequency domain units includes the first frequency domain subunit, the second frequency domain subunit, and the third frequency domain subunit, the first resource may include the second frequency domain subunit and the third frequency domain subunit in the 1^{st} frequency domain unit in the M frequency domain units, and but does not include the first frequency domain subunit in the 1^{st} frequency domain unit; or if the 1^{st} frequency domain unit in the M frequency domain units includes the third frequency domain subunit, but does not include the first frequency domain subunit and the second frequency domain subunit, the first resource may include the third frequency domain subunit in the 1^{st} frequency domain unit, in other words, if the 1^{st} frequency domain unit includes only one frequency domain subunit, a GB may not be reserved in the 1^{st} frequency domain unit, and in this case, if a signal is received or sent on a frequency domain unit adjacent to the 1^{st} frequency domain unit, a GB may be reserved in the frequency domain unit; or if the 1^{st} frequency domain unit in the M frequency domain units includes the second frequency domain subunit and the third frequency domain subunit, but does not include the first frequency domain subunit, the 1^{st} frequency domain unit is located at an edge of the first resource pool, and in this case, because the third frequency domain subunit in the 1^{st} frequency domain unit is located at the edge of the first resource pool, and no signal is received or sent on a frequency domain unit adjacent to the third frequency domain subunit in the 1^{st} frequency domain unit, the first resource may include the third frequency domain subunit in the 1^{st} frequency domain unit, and may or may not include the second frequency domain subunit in the 1^{st} frequency domain unit. For example, if M=1, the first resource may not include the third frequency domain subunit in the 1^{st} frequency domain unit; or if M>1, the first resource may include the third frequency domain subunit in the 1^{st} frequency domain unit.

In addition, when the first UE sends the first SL information in the second duplex mode, in other words, the first UE operates in the second duplex mode, if the M^{th} frequency domain unit in the M frequency domain units includes the first frequency domain subunit, the second frequency domain subunit, and the third frequency domain subunit, the first resource may include the first frequency domain subunit and the third frequency domain subunit in the M^{th} frequency domain unit, but does not include the second frequency domain subunit; or if the M^{th} frequency domain unit in the M frequency domain units includes the third frequency domain subunit, but does not include the first frequency domain subunit and the second frequency domain subunit, the first resource may include the third frequency domain subunit in the M^{th} frequency domain unit, in other words, if the M^{th} frequency domain unit includes only one frequency domain subunit, a GB may not be reserved in the M^{th} frequency domain unit, and in this case, if a signal is received or sent on a frequency domain unit adjacent to the M^{th} frequency domain unit, a GB may be reserved in the frequency domain unit; or if the M^{th} frequency domain unit in the M frequency domain units includes the first frequency domain subunit and the third frequency domain subunit, but does not include the second frequency domain subunit, the M^{th} frequency domain unit is located at an edge of the first resource pool, and in this case, because the third frequency domain subunit in the M^{th} frequency domain unit is located at the edge of the first resource pool, and no signal is received or sent on a frequency domain unit adjacent to the third frequency domain subunit in the M^{th} frequency domain unit, the first resource may include the third frequency domain subunit in the M^{th} frequency domain unit, and may or may not include the first frequency domain subunit in the M^{th} frequency domain unit. For example, if M=1, the first resource may not include the third frequency domain subunit in the M^{th} frequency domain unit; or if M>1, the first resource may include the third frequency domain subunit in the M^{th} frequency domain unit.

It may be understood that, when the first UE operates in the second duplex mode, it indicates that the first UE may perform both sending and receiving in a same slot, a sending process of the first UE may cause interference to a receiving process of the first UE, and a GB may be reserved between a sending resource and a receiving resource of the first UE. Therefore, the first resource may include a part or all of a frequency domain subunit in the M frequency domain units.

In the foregoing manner, when the first UE operating in the first duplex mode sends the SL information to the second UE operating in the first duplex mode, no GB needs to be reserved. When the first UE operating in the first duplex mode sends the SL information to the second UE operating in the second duplex mode, because the second UE reserves a GB on a sending resource of the second UE, it can be ensured that the GB exists between resources used by the second UE for simultaneous receiving and sending. When the first UE operating in the second duplex mode sends the SL information to the second UE operating in the first duplex mode, because the first UE reserves a GB on a sending resource of the first UE, it can be ensured that the GB exists between resources used by the first UE for simultaneous receiving and sending. When the first UE operating in the second duplex mode sends the SL information to the second UE operating in the second duplex mode, because the first UE and the second UE reserve GBs on a sending resource of the first UE and a sending resource of the second UE respectively, it can be ensured that the GBs exist respectively between resources used by the first UE for simultaneous receiving and sending and between resources used by the second UE for simultaneous receiving and sending.

The frequency domain subunit included in the first resource can be determined based on the operating mode of the first UE, and there is no need to consider excessive factors. Therefore, the determining manner is simple.

2. A frequency domain subunit included in the first resource is determined based on resource selection.
(1) The first UE sends the first SL information in a first duplex mode, and the second UE may further send second SL information (a receive end of the second SL information may be the first UE or another UE) in the first duplex mode in addition to receiving the first SL information.

In this case, if the 1^{st} frequency domain unit in the M frequency domain units includes the first frequency domain subunit, the second frequency domain subunit, and the third frequency domain subunit, the first resource may include the first frequency domain subunit, the second frequency domain subunit, and the third frequency domain subunit in the 1^{st} frequency domain unit, or if the 1^{st} frequency domain unit in the M frequency domain units includes the second frequency domain subunit and the third frequency domain subunit, but does not include the first frequency domain subunit, the first resource may include the second frequency domain subunit and the third frequency domain subunit in the 1^{st} frequency domain unit, or if the 1^{st} frequency domain unit in the M frequency domain units includes the third frequency domain subunit, but does not include the first frequency domain subunit and the second frequency domain subunit, the first resource may include the third frequency domain subunit in the 1^{st} frequency domain unit; and/or if the M^{th} frequency domain unit in the M frequency domain units includes the first frequency domain subunit, the second frequency domain subunit, and the third frequency domain subunit, the first resource may include the first frequency domain subunit, the second frequency domain subunit, and the third frequency domain subunit in the M^{th} frequency domain unit, or if the M^{th} frequency domain unit in the M frequency domain units includes the first frequency domain subunit and the third frequency domain subunit, but does not include the second frequency domain subunit, the first SL information occupies the first frequency domain subunit and the third frequency domain subunit in the M^{th} frequency domain unit, or if the M^{th} frequency domain unit in the M frequency domain units includes the third frequency domain subunit, but does not include the first frequency domain subunit and the second frequency domain subunit, the first resource may include the third frequency domain subunit in the M^{th} frequency domain unit.

It may be understood that, when both the first UE and the second UE operate in the first duplex mode, it indicates that a sending process of the first UE may not cause interference to a receiving process of the first UE, a sending process of the second UE may not cause interference to a receiving process of the second UE, and no GB needs to be reserved between a sending resource and a receiving resource of the first UE. Therefore, the first resource may include all frequency domain subunits in the M frequency domain units.

(2) The first UE sends the first SL information in a first duplex mode, the second UE further sends second SL information (a receive end of the second SL information may be the first UE or another UE) on a second resource in a second duplex mode in addition to receiving the first SL information, and a time domain resource of the second resource is partially or completely the same as a time domain resource of the first resource. In this case, the first UE may consider whether to reserve a GB in the first resource, to reduce interference between the first resource and the second resource.

If the 1^{st} frequency domain unit in the M frequency domain units includes the first frequency domain subunit, the second frequency domain subunit, and the third frequency domain subunit, and the 1^{st} frequency domain unit is adjacent to a frequency domain resource of the second resource, for example, the 1^{st} frequency domain unit is adjacent to any frequency domain unit in K frequency domain units, the first resource may include the third frequency domain subunit in the 1^{st} frequency domain unit in the M frequency domain units, but does not include the first frequency domain subunit or the second frequency domain subunit in the 1^{st} frequency domain unit; or if the 1^{st} frequency domain unit is not adjacent to the frequency domain resource of the second resource, for example, the 1^{st} frequency domain unit is not adjacent to any frequency domain unit in the K frequency domain units, the first resource may include the first frequency domain subunit, the second frequency domain subunit, and the third frequency domain subunit in the 1^{st} frequency domain unit.

For example, the first UE may perform a sensing (sensing) process, detect sidelink control information (sidelink control information, SCI) from another UE, and determine, based on resource reservation information carried in the SCI, a sending resource reserved by the another UE. If a time domain resource included in the sending resource reserved by the another UE is completely or partially the same as the time domain resource of the first resource, for example, a same slot, it indicates that the first resource and the resource reserved by the another UE may need to simultaneously transmit signals. In this case, the first UE may determine whether the M frequency domain units are adjacent to the sending resource reserved by the another UE, and then determine whether the first resource includes the first frequency domain subunit or the second frequency domain subunit in the 1^{st} frequency domain unit. For example, the first UE receives SCI from the second UE, and determines, based on resource reservation information carried in the SCI, that the second UE reserves the second resource. For example, if the second resource includes the K frequency domain units in the first resource pool, K is an integer greater than or equal to 0, and the time domain resource of the second resource is completely or partially the same as the time domain resource of the first resource, the first UE may determine whether a frequency domain resource of the first resource is adjacent to the frequency domain resource of the second resource. For example, the first UE determines whether the 1^{st} frequency domain unit in the M frequency domain units is adjacent to any frequency domain unit in the K frequency domain units. If M=1, the first UE may determine whether the frequency domain unit is adjacent to a 1^{st} frequency domain unit or a K^{th} frequency domain unit in the K frequency domain units. If M is greater than 1, the first UE may determine whether the 1^{st} frequency domain unit in the M frequency domain units is adjacent to a K^{th} frequency domain unit in the K frequency domain units. If the 1^{st} frequency domain unit in the M frequency domain units is adjacent to any frequency domain unit in the K frequency domain units, the first frequency domain subunit or the second frequency domain subunit in the 1^{st} frequency domain unit in the M frequency domain units may be used as a GB, and is not included in the first resource. For example, if the 1^{st} frequency domain unit in the M frequency domain units is adjacent to the 1^{st} frequency domain unit in the K frequency domain units, the first resource may not include the second frequency domain subunit in the 1^{st} frequency domain unit in the M frequency domain units, but the first frequency domain subunit and the third frequency domain subunit in the 1^{st} frequency domain unit in the M frequency domain units may be included in the first resource. Alternatively, if the 1^{st} frequency domain unit in the M frequency domain units is adjacent to the K^{th} frequency domain unit in the K frequency domain units, the first resource may not include the first frequency domain subunit in the 1^{st} frequency domain unit in the M frequency domain units, but the second frequency domain subunit and the third frequency domain subunit in the 1^{st} frequency domain unit in the M frequency domain units may be included in the first resource. In this embodiment of this application, for example, a frequency of the 1^{st} frequency domain unit in the K frequency domain units is lower than a frequency of the K^{th} frequency domain unit.

If the M^{th} frequency domain unit in the M frequency domain units includes the first frequency domain subunit, the second frequency domain subunit, and the third frequency domain subunit, and the M^{th} frequency domain unit is adjacent to the frequency domain resource of the second resource, for example, the M^{th} frequency domain unit is adjacent to any frequency domain unit in K frequency domain units, the first resource may include the third frequency domain subunit in the M^{th} frequency domain unit, but does not include the first frequency domain subunit or the second frequency domain subunit in the M^{th} frequency domain unit; or if the M^{th} frequency domain unit is not adjacent to the frequency domain resource of the second resource, for example, the M^{th} frequency domain unit is not adjacent to any frequency domain unit in the K frequency domain units, the first resource may include the first frequency domain subunit, the second frequency domain subunit, and the third frequency domain subunit in the M^{th} frequency domain unit.

For example, the first UE determines, based on the resource reservation information from the second UE, whether the M^{th} frequency domain unit in the M frequency domain units is adjacent to any frequency domain unit in the K frequency domain units. If M=1, the first UE may determine whether the frequency domain unit is adjacent to the 1^{st} frequency domain unit or the K^{th} frequency domain unit in the K frequency domain units. If M is greater than 1, the first UE may determine whether the M^{th} frequency domain unit in the M frequency domain units is adjacent to the 1^{st} frequency domain unit in the K frequency domain units. If the M^{th} frequency domain unit in the M frequency domain units is adjacent to any frequency domain unit in the K frequency domain units, the first frequency domain subunit or the second frequency domain subunit in the M^{th} frequency domain unit may be used as a GB, and is not occupied by the first SL information. For example, if the M^{th} frequency domain unit in the M frequency domain units is adjacent to the 1^{st} frequency domain unit in the K frequency domain units, the first resource may not include the second frequency domain subunit in the M^{th} frequency domain unit, but the first frequency domain subunit and the third frequency domain subunit in the M^{th} frequency domain unit may be included in the first resource. Alternatively, if the M^{th} frequency domain unit in the M frequency domain units is adjacent to the K^{th} frequency domain unit in the K frequency domain units, the first resource may not include the first frequency domain subunit in the M^{th} frequency domain unit, but the second frequency domain subunit and the third frequency domain subunit in the M^{th} frequency domain unit may be included in the first resource.

If the 1^{st} frequency domain unit in the M frequency domain units includes the second frequency domain subunit and the third frequency domain subunit, but does not include the first frequency domain subunit, and the 1^{st} frequency domain unit is adjacent to a frequency domain resource of the second resource, for example, the 1^{st} frequency domain unit is adjacent to any frequency domain unit in K frequency domain units, the first resource may include the third frequency domain subunit in the 1^{st} frequency domain unit, but does not include the second frequency domain subunit in the 1^{st} frequency domain unit; or if the 1^{st} frequency domain unit is not adjacent to the frequency domain resource of the second resource, for example, the 1^{st} frequency domain unit is not adjacent to any frequency domain unit in the K frequency domain units, the first resource may include the second frequency domain subunit and the third frequency domain subunit in the 1^{st} frequency domain unit.

If the 1^{st} frequency domain unit in the M frequency domain units includes the second frequency domain subunit and the third frequency domain subunit, but does not include the first frequency domain subunit, it indicates that the 1^{st} frequency domain unit is located at an edge of the first resource pool. In this case, no signal is received or sent on a frequency domain unit adjacent to the third frequency domain subunit in the 1^{st} frequency domain unit. If M is greater than 1, the first SL information is still sent on a frequency domain unit adjacent to the second frequency domain subunit in the 1^{st} frequency domain unit. Therefore, when M is greater than 1, the first UE may not need to consider resource occupation of another UE, and the first SL information may occupy the second frequency domain subunit and the third frequency domain subunit in the 1^{st} frequency domain unit. However, if M=1, other SL information may be transmitted on a frequency domain unit adjacent to the second frequency domain subunit in the frequency domain unit. Therefore, the first UE may consider resource occupation of another UE. For example, when M=1, the first UE determines, based on the resource reservation information from the second UE, whether the 1^{st} frequency domain unit in the M frequency domain units is adjacent to the frequency domain resource of the second resource, for example, determines whether the 1^{st} frequency domain unit is adjacent to any frequency domain unit in the K frequency domain units. Because M=1 and the frequency domain unit is located at the edge of the first resource pool, the first UE may determine whether the frequency domain unit is adjacent to a 1^{st} frequency domain unit in the K frequency domain units. If the frequency domain unit is adjacent to the 1^{st} frequency domain unit in the K frequency domain units, the second frequency domain subunit in the frequency domain unit may be used as a GB, and is not included in the first resource, but the third frequency domain subunit in the frequency domain unit may be included in the first resource.

If the M^{th} frequency domain unit in the M frequency domain units includes the first frequency domain subunit and the third frequency domain subunit, but does not include the second frequency domain subunit, and the M^{th} frequency domain unit is adjacent to the frequency domain resource of the second resource, for example, the M^{th} frequency domain unit is adjacent to any frequency domain unit in the K frequency domain units, the first resource may include the third frequency domain subunit in the M^{th} frequency domain unit, but does not include the first frequency domain subunit; or if the M^{th} frequency domain unit is not adjacent to the frequency domain resource of the second resource, for example, the M^{th} frequency domain unit is not adjacent to any frequency domain unit in the K frequency domain units, the first resource may include the first frequency domain subunit and the third frequency domain subunit in the M^{th} frequency domain unit.

If the M^{th} frequency domain unit in the M frequency domain units includes the first frequency domain subunit and the third frequency domain subunit, but does not include the second frequency domain subunit, it indicates that the M^{th} frequency domain unit is located at the edge of the first resource pool. In this case, no signal is received or sent on a frequency domain unit adjacent to the third frequency domain subunit in the M^{th} frequency domain unit. If M is greater than 1, the first SL information is still sent on a frequency domain unit adjacent to the first frequency domain subunit in the M^{th} frequency domain unit. Therefore, when M is greater than 1, the first UE may not need to consider resource occupation of another UE, and the first resource may include the first frequency domain subunit and the third frequency domain subunit in the M^{th} frequency domain unit. However, if M=1, other SL information may be transmitted on a frequency domain unit adjacent to the first frequency domain subunit in the frequency domain unit. Therefore, the first UE may consider resource occupation of another UE. For example, when M=1, the first UE determines, based on the resource reservation information from the second UE, whether the M^{th} frequency domain unit in the M frequency domain units is adjacent to the frequency domain resource of the second resource, for example, determines whether the M^{th} frequency domain unit is adjacent to any frequency domain unit in the K frequency domain units. Because M=1 and the frequency domain unit is located at the edge of the first resource pool, the first UE may determine whether the frequency domain unit is adjacent to a K^{th} frequency domain unit in the K frequency domain units. If the frequency domain unit is adjacent to the K^{th} frequency domain unit in the K frequency domain units, the first frequency domain subunit in the frequency domain unit may be used as a GB, and is not included in the first resource, but the third frequency domain subunit in the frequency domain unit may be included in the first SL resource.

If the 1^{st} frequency domain unit in the M frequency domain units includes the third frequency domain subunit, but does not include the first frequency domain subunit and the second frequency domain subunit, the first resource may include the third frequency domain subunit in the 1^{st} frequency domain unit in the M frequency domain units. In other words, if the 1^{st} frequency domain unit in the M frequency domain units includes only one frequency domain subunit, a GB may not be reserved in the 1^{st} frequency domain unit in the M frequency domain units. In this case, if the 1^{st} frequency domain unit in the M frequency domain units is adjacent to any frequency domain unit in K frequency domain units included in the second resource, a GB may be reserved in the frequency domain unit in the second resource. For example, a frequency domain subunit that is in the frequency domain unit in the second resource and that is adjacent to the 1^{st} frequency domain unit is reserved as the GB.

If the M^{th} frequency domain unit in the M frequency domain units includes the third frequency domain subunit, but does not include the first frequency domain subunit and the second frequency domain subunit, the first resource may include the third frequency domain subunit in the M^{th} frequency domain unit. In other words, if the M^{th} frequency domain unit includes only one frequency domain subunit, a GB may not be reserved in the M^{th} frequency domain unit. In this case, if the M^{th} frequency domain unit is adjacent to any frequency domain unit in the K frequency domain units included in the second resource, a GB may be reserved in the frequency domain unit in the second resource. For example, a frequency domain subunit that is in the frequency domain unit in the second resource and that is adjacent to the M^{th} frequency domain unit is reserved as the GB.

In the foregoing description, if the frequency domain resource of the first resource is adjacent to the frequency domain resource of the second resource, the first UE may reserve the GB in the first resource. Optionally, a prerequisite for the first UE to perform such processing is that the second UE does not reserve a GB in the second resource. For example, the first UE may determine, based on the SCI from the second UE, whether the second UE reserves the GB in the second resource. If the second UE does not reserve the GB in the second resource, the first UE may reserve the GB in the first resource in the foregoing manner; or if the second UE reserves the GB in the second resource, the first UE may reserve the GB in the first resource in the foregoing manner, or the first UE may not reserve the GB in the first resource. For example, the first resource may include all frequency domain subunits in the M frequency domain units.

For example, if the 1^{st} frequency domain unit in the K frequency domain units includes the first frequency domain subunit, the second frequency domain subunit, and the third frequency domain subunit, and the first UE determines, based on the SCI from the second UE, that the second resource includes the first frequency domain subunit in the 1^{st} frequency domain unit in the K frequency domain units, it indicates that the second UE does not reserve the GB in the 1^{st} frequency domain unit in the second resource. Alternatively, if the 1^{st} frequency domain unit in the K frequency domain units includes the second frequency domain subunit and the third frequency domain subunit, but does not include the first frequency domain subunit, and the first UE determines, based on the SCI from the second UE, that the second resource includes the second frequency domain subunit in the 1^{st} frequency domain unit in the K frequency domain units, it indicates that the second UE does not reserve the GB in the 1^{st} frequency domain unit in the second resource. Alternatively, if the K^{th} frequency domain unit in the K frequency domain units includes the first frequency domain subunit, the second frequency domain subunit, and the third frequency domain subunit, and the first UE determines, based on the SCI from the second UE, that the second resource includes the second frequency domain subunit in the K^{th} frequency domain unit in the K frequency domain units, it indicates that the second UE does not reserve the GB in the K^{th} frequency domain unit in the second resource. Alternatively, if the K^{th} frequency domain unit in the K frequency domain units includes the first frequency domain subunit and the third frequency domain subunit, but does not include the second frequency domain subunit, and the first UE determines, based on the SCI from the second UE, that the second resource includes the first frequency domain subunit in the K^{th} frequency domain unit in the K frequency domain units, it indicates that the second UE does not reserve the GB in the K^{th} frequency domain unit in the second resource.

(3) The first UE sends the first SL information in a second duplex mode, and the second UE further sends second SL information (a receive end of the second SL information may be the first UE or another UE) in a first duplex mode in addition to receiving the first SL information. In addition, the first UE further receives third SL information on a third resource in addition to sending the first SL information, a transmit end of the third SL information may be the second UE or another UE, and a time domain resource of the third resource is partially or completely the same as a time domain resource of the first resource. In this case, because the second UE sends the second SL information in the first duplex mode, the first UE may not need to consider a conflict between the first resource and a transmission resource of the second SL information. However, if the first UE needs to send the first SL information on the first resource and receive the third SL information on the third resource, the first UE may consider whether to reserve a GB in the first resource, to reduce interference between the first resource and the third resource.

If the 1^{st} frequency domain unit in the M frequency domain units includes the first frequency domain subunit, the second frequency domain subunit, and the third frequency domain subunit, and the 1^{st} frequency domain unit is adjacent to a frequency domain resource of the third resource, for example, the 1^{st} frequency domain unit is adjacent to any frequency domain unit in Q frequency domain units, the first resource may include the third frequency domain subunit in the 1^{st} frequency domain unit in the M frequency domain units, but does not include the first frequency domain subunit or the second frequency domain subunit in the 1^{st} frequency domain unit; or if the 1^{st} frequency domain unit is not adjacent to the third resource, for example, the 1^{st} frequency domain unit is not adjacent to any frequency domain unit in the Q frequency domain units, the first resource may include the first frequency domain subunit, the second frequency domain subunit, and the third frequency domain subunit in the 1^{st} frequency domain unit.

For example, if the third resource includes the Q frequency domain units in the first resource pool, Q is an integer greater than or equal to 0, and the time domain resource of the third resource is completely or partially the same as the time domain resource of the first resource, the first UE may determine whether the frequency domain resource of the first resource is adjacent to the frequency domain resource of the third resource. For example, the first UE determines whether the 1^{st} frequency domain unit in the M frequency domain units is adjacent to the frequency domain resource of the third resource, for example, determines whether the 1^{st} frequency domain unit is adjacent to any frequency domain unit in the Q frequency domain units. If M=1, the first UE may determine whether the frequency domain unit is adjacent to a 1^{st} frequency domain unit or a Q^{th} frequency domain unit in the Q frequency domain units. If M is greater than 1, the first UE may determine whether the 1^{st} frequency domain unit in the M frequency domain units is adjacent to a Q^{th} frequency domain unit in the Q frequency domain units. If the 1^{st} frequency domain unit in the M frequency domain units is adjacent to any frequency domain unit in the Q frequency domain units, the first frequency domain subunit or the second frequency domain subunit in the 1^{st} frequency domain unit in the M frequency domain units may be used as a GB, and is not included in the first resource. For example, if the 1^{st} frequency domain unit in the M frequency domain units is adjacent to the 1^{st} frequency domain unit in the Q frequency domain units, the first resource may not include the second frequency domain subunit in the 1^{st} frequency domain unit in the M frequency domain units, but the first frequency domain subunit and the third frequency domain subunit in the 1^{st} frequency domain unit in the M frequency domain units may be included in the first resource. Alternatively, if the 1^{st} frequency domain unit in the M frequency domain units is adjacent to the Q^{th} frequency domain unit in the Q frequency domain units, the first resource may not include the first frequency domain subunit in the 1^{st} frequency domain unit in the M frequency domain units, but the second frequency domain subunit and the third frequency domain subunit in the 1^{st} frequency domain unit in the M frequency domain units may be included in the first resource. In this embodiment of this application, for example, a frequency of the 1^{st} frequency domain unit in the Q frequency domain units is lower than a frequency of the Q^{th} frequency domain unit.

If the M^{th} frequency domain unit in the M frequency domain units includes the first frequency domain subunit, the second frequency domain subunit, and the third frequency domain subunit, and the M^{th} frequency domain unit is adjacent to the frequency domain resource of the third resource, for example, the M^{th} frequency domain unit is adjacent to any frequency domain unit in the Q frequency domain units, the first resource may include the third frequency domain subunit in the M^{th} frequency domain unit, but does not include the first frequency domain subunit or the second frequency domain subunit in the M^{th} frequency domain unit; or if the M^{th} frequency domain unit is not adjacent to the frequency domain resource of the third resource, for example, the M^{th} frequency domain unit is not adjacent to any frequency domain unit in the Q frequency domain units, the first resource may include the first frequency domain subunit, the second frequency domain subunit, and the third frequency domain subunit in the M^{th} frequency domain unit.

For example, the first UE determines whether the M^{th} frequency domain unit in the M frequency domain units is adjacent to any frequency domain unit in the Q frequency domain units. If M=1, the first UE may determine whether the frequency domain unit is adjacent to the 1^{st} frequency domain unit or the Q^{th} frequency domain unit in the Q frequency domain units. If M is greater than 1, the first UE may determine whether the M^{th} frequency domain unit in the M frequency domain units is adjacent to the 1^{st} frequency domain unit in the Q frequency domain units. If the M^{th} frequency domain unit in the M frequency domain units is adjacent to any frequency domain unit in the Q frequency domain units, the first frequency domain subunit or the second frequency domain subunit in the M^{th} frequency domain unit may be used as a GB, and is not included in the first resource. For example, if the M^{th} frequency domain unit in the M frequency domain units is adjacent to the 1^{st} frequency domain unit in the Q frequency domain units, the first resource may not include the second frequency domain subunit in the M^{th} frequency domain unit, but the first frequency domain subunit and the third frequency domain subunit in the M^{th} frequency domain unit may be included in the first resource. Alternatively, if the M^{th} frequency domain unit in the M frequency domain units is adjacent to the Q^{th} frequency domain unit in the Q frequency domain units, the first resource may not include the first frequency domain subunit in the M^{th} frequency domain unit, but the second frequency domain subunit and the third frequency domain subunit in the M^{th} frequency domain unit may be included in the first resource.

If the 1^{st} frequency domain unit in the M frequency domain units includes the second frequency domain subunit and the third frequency domain subunit, but does not include the first frequency domain subunit, and the 1^{st} frequency domain unit is adjacent to a frequency domain resource of the third resource, for example, the 1^{st} frequency domain unit is adjacent to any frequency domain unit in Q frequency domain units, the first resource may include the third frequency domain subunit in the 1^{st} frequency domain unit, but does not include the second frequency domain subunit in the 1^{st} frequency domain unit; or if the 1^{st} frequency domain unit is not adjacent to the frequency domain resource of the third resource, for example, the 1^{st} frequency domain unit is not adjacent to any frequency domain unit in the Q frequency domain units, the first resource may include the second frequency domain subunit and the third frequency domain subunit in the 1^{st} frequency domain unit.

If the 1^{st} frequency domain unit in the M frequency domain units includes the second frequency domain subunit and the third frequency domain subunit, but does not include the first frequency domain subunit, it indicates that the 1^{st} frequency domain unit is located at an edge of the first resource pool. In this case, no signal is received or sent on a frequency domain unit adjacent to the third frequency domain subunit in the 1^{st} frequency domain unit. If M is greater than 1, the first SL information is still sent on a frequency domain unit adjacent to the second frequency domain subunit in the 1^{st} frequency domain unit. Therefore, when M is greater than 1, the first UE may not need to consider resource occupation of another UE, and the first resource may include the second frequency domain subunit and the third frequency domain subunit in the 1^{st} frequency domain unit. However, if M=1, other SL information may be transmitted on a frequency domain unit adjacent to the second frequency domain subunit in the frequency domain unit. Therefore, the first UE may consider resource occupation of another UE. For example, when M=1, the first UE determines whether the 1^{st} frequency domain unit in the M frequency domain units is adjacent to any frequency domain unit in the Q frequency domain units. Because M=1 and the frequency domain unit is located at the edge of the first resource pool, the first UE may determine whether the frequency domain unit is adjacent to a 1^{st} frequency domain unit in the Q frequency domain units. If the frequency domain unit is adjacent to the 1^{st} frequency domain unit in the Q frequency domain units, the second frequency domain subunit in the frequency domain unit may be used as a GB, and is not included in the first resource, but the third frequency domain subunit in the frequency domain unit may be included in the first resource.

If the M^{th} frequency domain unit in the M frequency domain units includes the first frequency domain subunit and the third frequency domain subunit, but does not include the second frequency domain subunit, and the M^{th} frequency domain unit is adjacent to the frequency domain resource of the third resource, for example, the M^{th} frequency domain unit is adjacent to any frequency domain unit in the Q frequency domain units, the first resource may include the third frequency domain subunit in the M^{th} frequency domain unit, but does not include the first frequency domain subunit in the M^{th} frequency domain unit; or if the M^{th} frequency domain unit is not adjacent to the frequency domain resource of the third resource, for example, the M^{th} frequency domain unit is not adjacent to any frequency domain unit in the Q frequency domain units, the first resource may include the first frequency domain subunit and the third frequency domain subunit in the M^{th} frequency domain unit.

If the M^{th} frequency domain unit in the M frequency domain units includes the first frequency domain subunit and the third frequency domain subunit, but does not include the second frequency domain subunit, it indicates that the M^{th} frequency domain unit is located at the edge of the first resource pool. In this case, no signal is received or sent on a frequency domain unit adjacent to the third frequency domain subunit in the M^{th} frequency domain unit. If M is greater than 1, the first SL information is still sent on a frequency domain unit adjacent to the first frequency domain subunit in the M^{th} frequency domain unit. Therefore, when M is greater than 1, the first UE may not need to consider resource occupation of another UE, and the first resource may include the first frequency domain subunit and the third frequency domain subunit in the M^{th} frequency domain unit. However, if M=1, other SL information may be transmitted on a frequency domain unit adjacent to the first frequency domain subunit in the frequency domain unit. Therefore, the first UE may consider resource occupation of another UE. For example, when M=1, the first UE determines whether the M^{th} frequency domain unit in the M frequency domain units is adjacent to any frequency domain unit in the Q frequency domain units. Because M=1 and the frequency domain unit is located at the edge of the first resource pool, the first UE may determine whether the frequency domain unit is adjacent to a Q^{th} frequency domain unit in the Q frequency domain units. If the frequency domain unit is adjacent to the Q^{th} frequency domain unit in the Q frequency domain units, the first frequency domain subunit in the frequency domain unit may be used as a GB, and is not included in the first resource, but the third frequency domain subunit in the frequency domain unit may be included in the first resource.

If the 1^{st} frequency domain unit in the M frequency domain units includes the third frequency domain subunit, but does not include the first frequency domain subunit and the second frequency domain subunit, the first resource may include the third frequency domain subunit in the 1^{st} frequency domain unit in the M frequency domain units. In other words, if the 1^{st} frequency domain unit in the M frequency domain units includes only one frequency domain subunit, a GB may not be reserved in the 1^{st} frequency domain unit in the M frequency domain units. In this case, if the 1^{st} frequency domain unit in the M frequency domain units is adjacent to any frequency domain unit in Q frequency domain units included in the third resource, a GB may be reserved in the frequency domain unit in the second resource. For example, a frequency domain subunit that is in the frequency domain unit in the third resource and that is adjacent to the 1^{st} frequency domain unit is reserved as the GB.

If the M^{th} frequency domain unit in the M frequency domain units includes the third frequency domain subunit, but does not include the first frequency domain subunit and the second frequency domain subunit, the first resource may include the third frequency domain subunit in the M^{th} frequency domain unit. In other words, if the M^{th} frequency domain unit includes only one frequency domain subunit, a GB may not be reserved in the M^{th} frequency domain unit. In this case, if the M^{th} frequency domain unit is adjacent to any frequency domain unit in the Q frequency domain units included in the second resource, a GB may be reserved in the frequency domain unit in the third resource. For example, a frequency domain subunit that is in the frequency domain unit in the third resource and that is adjacent to the M^{th} frequency domain unit is reserved as the GB.

In the foregoing description, if the frequency domain resource of the first resource is adjacent to the frequency domain resource of the third resource, the first UE may reserve the GB in the first resource. Optionally, a prerequisite for the first UE to perform such processing is that the first UE does not reserve a GB in the third resource. For example, if the first UE does not reserve the GB in the third resource, the first UE may reserve the GB in the first resource in the foregoing manner; or if the first UE reserves the GB in the third resource, the first UE may reserve the GB in the first resource in the foregoing manner, or the first UE may not reserve the GB in the first resource. For example, the first resource may include all frequency domain subunits in the M frequency domain units.

For example, if the 1^{st} frequency domain unit in the Q frequency domain units includes the first frequency domain subunit, the second frequency domain subunit, and the third frequency domain subunit, and the third resource includes the first frequency domain subunit in the 1^{st} frequency domain unit in the Q frequency domain units, it may indicate that the first UE does not reserve the GB in the 1^{st} frequency domain unit in the third resource. Alternatively, if the 1^{st} frequency domain unit in the Q frequency domain units includes the second frequency domain subunit and the third frequency domain subunit, but does not include the first frequency domain subunit, and the third resource includes the second frequency domain subunit in the 1^{st} frequency domain unit in the Q frequency domain units, it indicates that the first UE does not reserve the GB in the 1^{st} frequency domain unit in the third resource. Alternatively, if the Q^{th} frequency domain unit in the Q frequency domain units includes the first frequency domain subunit, the second frequency domain subunit, and the third frequency domain subunit, and the third resource includes the second frequency domain subunit in the Q^{th} frequency domain unit in the Q frequency domain units, it indicates that the second UE does not reserve the GB in the Q^{th} frequency domain unit in the third resource. Alternatively, if the Q^{th} frequency domain unit in the Q frequency domain units includes the first frequency domain subunit and the third frequency domain subunit, but does not include the second frequency domain subunit, and the third resource includes the first frequency domain subunit in the Q^{th} frequency domain unit in the Q frequency domain units, it indicates that the second UE does not reserve the GB in the Q^{th} frequency domain unit in the third resource.

(4) The first UE sends the first SL information in a second duplex mode, and the second UE further sends second SL information (a receive end of the second SL information may be the first UE or another UE) on a second resource in the second duplex mode in addition to receiving the first SL information. In addition, the first UE further receives third SL information on a third resource in addition to sending the first SL information. A transmit end of the third SL information may be the second UE or another UE. A time domain resource of the first resource is completely or partially the same as a time domain resource of the second resource, and/or the time domain resource of the first resource is completely or partially the same as a time domain resource of the third resource. In this case, the first UE may consider interference between the second resource and/or the third resource and the first resource.

If the 1^{st} frequency domain unit in the M frequency domain units includes the first frequency domain subunit, the second frequency domain subunit, and the third frequency domain subunit, and the 1^{st} frequency domain unit is adjacent to a frequency domain resource of the second resource and/or a frequency domain resource of the third resource, for example, the 1^{st} frequency domain unit is adjacent to any frequency domain unit in K frequency domain units, and/or is adjacent to any frequency domain unit in Q frequency domain units, the first resource may include the third frequency domain subunit in the 1^{st} frequency domain unit in the M frequency domain units, but does not include the first frequency domain subunit or the second frequency domain subunit in the 1^{st} frequency domain unit; or if the 1^{st} frequency domain unit is adjacent to neither the frequency domain resource of the second resource nor the frequency domain resource of the third resource, for example, the 1^{st} frequency domain unit is adjacent to neither all frequency domain units in the Q frequency domain units nor all frequency domain units in the K frequency domain units, the first resource may include the first frequency domain subunit, the second frequency domain subunit, and the third frequency domain subunit in the 1^{st} frequency domain unit.

For example, if the third resource includes the Q frequency domain units in the first resource pool, Q is an integer greater than or equal to 0, and the time domain resource of the third resource is completely or partially the same as the time domain resource of the first resource, the first UE may determine whether the frequency domain resource of the first resource is adjacent to the frequency domain resource of the third resource; and/or the first UE receives SCI from the second UE, and determines, based on resource reservation information carried in the SCI, that the second UE reserves the second resource. For example, if the second resource includes the K frequency domain units in the first resource pool, K is an integer greater than or equal to 0, and the time domain resource of the second resource is completely or partially the same as the time domain resource of the first resource, the first UE may determine whether the frequency domain resource of the first resource is adjacent to the frequency domain resource of the second resource. For example, the first UE determines whether the 1^{st} frequency domain unit in the M frequency domain units is adjacent to any frequency domain unit in the K frequency domain units, and/or determines whether the 1^{st} frequency domain unit in the M frequency domain units is adjacent to any frequency domain unit in the Q frequency domain units. If M=1, the first UE may determine whether the frequency domain unit is adjacent to a 1^{st} frequency domain unit or a K^{th} frequency domain unit in the K frequency domain units, and/or determine whether the frequency domain unit is adjacent to a 1^{st} frequency domain unit or a Q^{th} frequency domain unit in the Q frequency domain units. If M is greater than 1, the first UE may determine whether the 1^{st} frequency domain unit in the M frequency domain units is adjacent to a K^{th} frequency domain unit in the K frequency domain units, and/or determine whether the 1^{st} frequency domain unit in the M frequency domain units is adjacent to a Q^{th} frequency domain unit in the Q frequency domain units. If the 1^{st} frequency domain unit in the M frequency domain units is adjacent to any frequency domain unit in the K frequency domain units, and/or the 1^{st} frequency domain unit in the M frequency domain units is adjacent to any frequency domain unit in the Q frequency domain units, the first frequency domain subunit or the second frequency domain subunit in the 1^{st} frequency domain unit in the M frequency domain units may be used as a GB, and is not included in the first resource. For example, if the 1^{st} frequency domain unit in the M frequency domain units is adjacent to the 1^{st} frequency domain unit in the K frequency domain units, and/or the 1^{st} frequency domain unit in the M frequency domain units is adjacent to the 1^{st} frequency domain unit in the Q frequency domain units, the first resource may not include the second frequency domain subunit in the 1^{st} frequency domain unit in the M frequency domain units, but the first frequency domain subunit in the 1^{st} frequency domain unit in the M frequency domain units may be included in the first resource. Alternatively, if the 1^{st} frequency domain unit in the M frequency domain units is adjacent to the K^{th} frequency domain unit in the K frequency domain units, and/or the 1^{st} frequency domain unit in the M frequency domain units is adjacent to the Q^{th} frequency domain unit in the Q frequency domain units, the first resource may not include the first frequency domain subunit in the 1^{st} frequency domain unit in the M frequency domain units, but the second frequency domain subunit in the 1^{st} frequency domain unit in the M frequency domain units may be included in the first resource.

If the M^{th} frequency domain unit in the M frequency domain units includes the first frequency domain subunit, the second frequency domain subunit, and the third frequency domain subunit, and the M^{th} frequency domain unit is adjacent to the frequency domain resource of the second resource and/or the frequency domain resource of the third resource, for example, the M^{th} frequency domain unit is adjacent to any frequency domain unit in the K frequency domain units and/or any frequency domain unit in the Q frequency domain units, the first resource may include the third frequency domain subunit in the M^{th} frequency domain unit, but does not include the first frequency domain subunit or the second frequency domain subunit in the M^{th} frequency domain unit; or if the M^{th} frequency domain unit is adjacent to neither the frequency domain resource of the second resource nor the frequency domain resource of the third resource, for example, the M^{th} frequency domain unit is adjacent to neither all frequency domain units in the K frequency domain units nor all frequency domain units in the Q frequency domain units, the first resource may include the first frequency domain subunit, the second frequency domain subunit, and the third frequency domain subunit in the M^{th} frequency domain unit.

For example, the first UE determines whether the M^{th} frequency domain unit in the M frequency domain units is adjacent to any frequency domain unit in the Q frequency domain units, and/or the first UE determines, based on the resource reservation information from the second UE, whether the M^{th} frequency domain unit in the M frequency domain units is adjacent to any frequency domain unit in the K frequency domain units. If M=1, the first UE may determine whether the frequency domain unit is adjacent to the 1^{st} frequency domain unit or the K^{th} frequency domain unit in the K frequency domain units, and/or determine whether the frequency domain unit is adjacent to the 1^{st} frequency domain unit or the Q^{th} frequency domain unit in the Q frequency domain units. If M is greater than 1, the first UE may determine whether the M^{th} frequency domain unit in the M frequency domain units is adjacent to the 1^{st} frequency domain unit in the K frequency domain units, and/or determine whether the frequency domain unit is adjacent to the 1^{st} frequency domain unit in the Q frequency domain units. If the M^{th} frequency domain unit in the M frequency domain units is adjacent to any frequency domain unit in the K frequency domain units, and/or is adjacent to any frequency domain unit in the Q frequency domain units, the first frequency domain subunit or the second frequency domain subunit in the M^{th} frequency domain unit may be used as a GB, and is not included in the first resource. For example, if the M^{th} frequency domain unit in the M frequency domain units is adjacent to the 1^{st} frequency domain unit in the K frequency domain units, and/or is adjacent to the 1^{st} frequency domain unit in the Q frequency domain units, the first resource may not include the second frequency domain subunit in the M^{th} frequency domain unit, but the first frequency domain subunit in the M^{th} frequency domain unit may be included in the first resource. Alternatively, if the M^{th} frequency domain unit in the M frequency domain units is adjacent to the K^{th} frequency domain unit in the K frequency domain units, and/or is adjacent to the Q^{th} frequency domain unit in the Q frequency domain units, the first resource may not include the first frequency domain subunit in the M^{th} frequency domain unit, but the second frequency domain subunit in the M^{th} frequency domain unit may be included in the first resource.

If the 1^{st} frequency domain unit in the M frequency domain units includes the second frequency domain subunit and the third frequency domain subunit, but does not include the first frequency domain subunit, and the 1^{st} frequency domain unit is adjacent to a frequency domain resource of the second resource and/or a frequency domain resource of the third resource, for example, the 1^{st} frequency domain unit is adjacent to any frequency domain unit in K frequency domain units, and/or is adjacent to any frequency domain unit in Q frequency domain units, the first resource may include the third frequency domain subunit in the 1^{st} frequency domain unit, but does not include the second frequency domain subunit in the 1^{st} frequency domain unit; or if the 1^{st} frequency domain unit is adjacent to neither the frequency domain resource of the second resource nor the frequency domain resource of the third resource, for example, the 1^{st} frequency domain unit is adjacent to neither all frequency domain units in the K frequency domain units nor all frequency domain units in the Q frequency domain units, the first resource may include the second frequency domain subunit, and the third frequency domain subunit in the 1^{st} frequency domain unit.

If the 1^{st} frequency domain unit in the M frequency domain units includes the second frequency domain subunit and the third frequency domain subunit, but does not include the first frequency domain subunit, it indicates that the 1^{st} frequency domain unit is located at an edge of the first resource pool. In this case, no signal is received or sent on a frequency domain unit adjacent to the third frequency domain subunit in the 1^{st} frequency domain unit. If M is greater than 1, the first SL information is still sent on a frequency domain unit adjacent to the second frequency domain subunit in the 1^{st} frequency domain unit. Therefore, when M is greater than 1, the first UE may not need to consider resource occupation of another UE and the first UE, and the first resource may include the second frequency domain subunit and the third frequency domain subunit in the 1^{st} frequency domain unit. However, if M=1, other SL information may be transmitted on a frequency domain unit adjacent to the second frequency domain subunit in the frequency domain unit. Therefore, the first UE may consider resource occupation of another UE and/or the first UE. For example, when M=1, the first UE determines whether the 1^{st} frequency domain unit in the M frequency domain units is adjacent to any frequency domain unit in the K frequency domain units and/or whether the 1^{st} frequency domain unit in the M frequency domain units is adjacent to any frequency domain unit in the Q frequency domain units. Because M=1 and the frequency domain unit is located at the edge of the first resource pool, the first UE may determine whether the frequency domain unit is adjacent to a 1^{st} frequency domain unit in the K frequency domain units and/or whether the frequency domain unit is adjacent to a 1^{st} frequency domain unit in the Q frequency domain units. If the frequency domain unit is adjacent to the 1^{st} frequency domain unit in the K frequency domain units, and/or is adjacent to the 1^{st} frequency domain unit in the Q frequency domain units, the second frequency domain subunit in the frequency domain unit may be used as a GB, and is not included in the first resource, but the third frequency domain subunit in the frequency domain unit may be included in the first resource.

If the M^{th} frequency domain unit in the M frequency domain units includes the first frequency domain subunit and the third frequency domain subunit, but does not include the second frequency domain subunit, and the M^{th} frequency domain unit is adjacent to the frequency domain resource of the second resource and/or the frequency domain resource of the third resource, for example, the M^{th} frequency domain unit is adjacent to any frequency domain unit in the K frequency domain units, and/or is adjacent to any frequency domain unit in the Q frequency domain units, the first resource may include the third frequency domain subunit in the M^{th} frequency domain unit, but does not include the first frequency domain subunit in the M^{th} frequency domain unit; or if the M^{th} frequency domain unit is adjacent to neither the second resource nor the third resource, for example, the M^{th} frequency domain unit is adjacent to neither all the frequency domain units in the K frequency domain units nor all the frequency domain units in the Q frequency domain units, the first resource may include the first frequency domain subunit and the third frequency domain subunit in the M^{th} frequency domain unit.

If the M^{th} frequency domain unit in the M frequency domain units includes the first frequency domain subunit and the third frequency domain subunit, but does not include the second frequency domain subunit, it indicates that the M^{th} frequency domain unit is located at the edge of the first resource pool. In this case, no signal is received or sent on a frequency domain unit adjacent to the third frequency domain subunit in the M^{th} frequency domain unit. If M is greater than 1, the first SL information is still sent on a frequency domain unit adjacent to the first frequency domain subunit in the M^{th} frequency domain unit. Therefore, when M is greater than 1, the first UE may not need to consider resource occupation of another UE and the first UE, and the first resource may include the first frequency domain subunit and the third frequency domain subunit in the M^{th} frequency domain unit. However, if M=1, other SL information may be transmitted on a frequency domain unit adjacent to the first frequency domain subunit in the frequency domain unit. Therefore, the first UE may consider resource occupation of another UE and/or the first UE. For example, when M=1, the first UE determines whether the M^{th} frequency domain unit in the M frequency domain units is adjacent to any frequency domain unit in the K frequency domain units, and/or determines whether the M^{th} frequency domain unit in the M frequency domain units is adjacent to any frequency domain unit in the Q frequency domain units. Because M=1 and the frequency domain unit is located at the edge of the first resource pool, the first UE may determine whether the frequency domain unit is adjacent to a K^{th} frequency domain unit in the K frequency domain units and/or whether the frequency domain unit is adjacent to a Q^{th} frequency domain unit in the Q frequency domain units. If the frequency domain unit is adjacent to the K^{th} frequency domain unit in the K frequency domain units, and/or is adjacent to the Q^{th} frequency domain unit in the Q frequency domain units, the first frequency domain subunit in the frequency domain unit may be used as a GB, and is not included in the first resource, but the third frequency domain subunit in the frequency domain unit may be included in the first resource.

If the 1^{st} frequency domain unit in the M frequency domain units includes the third frequency domain subunit, but does not include the first frequency domain subunit and the second frequency domain subunit, the first resource may include the third frequency domain subunit in the 1^{st} frequency domain unit in the M frequency domain units. In other words, if the 1^{st} frequency domain unit in the M frequency domain units includes only one frequency domain subunit, a GB may not be reserved in the 1^{st} frequency domain unit in the M frequency domain units. In this case, if the 1^{st} frequency domain unit in the M frequency domain units is adjacent to any frequency domain unit in K frequency domain units included in the second resource, a GB may be reserved in the frequency domain unit in the second resource, for example, a frequency domain subunit that is in the frequency domain unit in the second resource and that is adjacent to the 1^{st} frequency domain unit is reserved as a GB; and/or if the 1^{st} frequency domain unit in the M frequency domain units is adjacent to any frequency domain unit in Q frequency domain units included in the third resource, a GB may be reserved in the frequency domain unit in the third resource, for example, a frequency domain subunit that is in the frequency domain unit in the third resource and that is adjacent to the 1^{st} frequency domain unit is reserved as a GB.

If the M^{th} frequency domain unit in the M frequency domain units includes the third frequency domain subunit, but does not include the first frequency domain subunit and the second frequency domain subunit, the first resource may include the third frequency domain subunit in the M^{th} frequency domain unit. In other words, if the M^{th} frequency domain unit includes only one frequency domain subunit, a GB may not be reserved in the M^{th} frequency domain unit. In this case, if the M^{th} frequency domain unit is adjacent to any frequency domain unit in the K frequency domain units included in the second resource, a GB may be reserved in the frequency domain unit in the second resource, for example, a frequency domain subunit that is in the frequency domain unit in the second resource and that is adjacent to the M^{th} frequency domain unit is reserved as a GB; and/or if the M^{th} frequency domain unit in the M frequency domain units is adjacent to any frequency domain unit in the Q frequency domain units included in the third resource, a GB may be reserved in the frequency domain unit in the third resource, for example, a frequency domain subunit that is in the frequency domain unit in the third resource and that is adjacent to the M^{th} frequency domain unit is reserved as a GB.

In the foregoing description, if the frequency domain resource of the first resource is adjacent to the frequency domain resource of the second resource, the first UE may reserve the GB in the first resource. Optionally, a prerequisite for the first UE to perform such processing is that the second UE does not reserve a GB in the second resource. For example, if the second UE does not reserve the GB in the second resource, the first UE may reserve the GB in the first resource in the foregoing manner; or if the second UE reserves the GB in the second resource, the first UE may reserve the GB in the first resource in the foregoing manner, or the first UE may not reserve the GB in the first resource. In other words, in the foregoing process, the first UE may not need to determine whether the M frequency domain units are adjacent to the K frequency domain units. In addition, in the foregoing description, if the frequency domain resource of the first resource is adjacent to the frequency domain resource of the third resource, the first UE reserves the GB in the first resource. Optionally, a prerequisite for the first UE to perform such processing is that the first UE does not reserve a GB in the third resource. For example, if the first UE does not reserve the GB in the third resource, the first UE may reserve the GB in the first resource in the foregoing manner; or if the first UE reserves the GB in the third resource, the first UE may reserve the GB in the first resource in the foregoing manner, or the first UE may not reserve the GB in the first resource. In other words, in the foregoing process, the first UE may not need to determine whether the M frequency domain units are adjacent to the Q frequency domain units.

For a manner of determining whether the first UE reserves the GB in the third resource and whether the second UE reserves the GB in the second resource, refer to the foregoing related descriptions.

Optionally, the method further includes S302: The first UE sends the first SL information to the second UE on the first resource. Correspondingly, the second UE receives the first SL information from the first UE on the first resource. After determining the first resource, the first UE may send the first SL information on the first resource. Optionally, the network device or another UE may alternatively configure the first resource pool for the second UE (for example, send, to the second UE, configuration information used to configure the first resource pool), and the second UE can receive the first SL information by sensing the first resource pool.

In the foregoing manner, one or more of the first frequency domain subunit, the second frequency domain subunit, or the third frequency domain subunit included in one frequency domain unit may be used to send the SL information (for example, the first SL information), or may be used as a GB (for example, not occupied by the SL information). Therefore, the first UE can flexibly select a resource used to send the SL information, thereby improving flexibility of resource selection. In addition, this manner can reduce impact of self-interference and a probability of a resource conflict. In addition, after this manner is used, no fixed GB needs to be configured by a system. This can reduce a resource waste.

Optionally, the first UE may further send sidelink control information to the second UE, for example, SCI. The SCI may be carried on a sidelink control channel and/or a sidelink data channel. The sidelink control channel is, for example, a physical sidelink control channel (physical sidelink control channel, PSCCH), and the sidelink data channel is, for example, a physical sidelink shared channel (physical sidelink shared channel, PSSCH). The sidelink control information may be the SL control information included in the first SL information, or the sidelink control information is information other than the first SL information.

In the first resource pool, each of the N frequency domain units may include the first frequency domain subunit, the second frequency domain subunit, and the third frequency domain subunit; or each of a part of frequency domain units (a remaining frequency domain unit other than the 1^{st} frequency domain unit and the N^{th} frequency domain unit) in the N frequency domain units may include the first frequency domain subunit, the second frequency domain subunit, and the third frequency domain subunit, the 1^{st} frequency domain unit in the N frequency domain units may include the second frequency domain subunit and the third frequency domain subunit, or include the third frequency domain subunit, and the N^{th} frequency domain unit in the N frequency domain units may include the first frequency domain subunit and the third frequency domain subunit, or include the third frequency domain subunit. In an optional implementation, a mapping rule for the sidelink control channel may include one or more of the following: If one of the M frequency domain units includes the first frequency domain subunit, the second frequency domain subunit, and the third frequency domain subunit, the third frequency domain subunit may be used to map the sidelink control channel; or if one of the M frequency domain units includes the first frequency domain subunit and the third frequency domain subunit, but does not include the second frequency domain subunit, the third frequency domain subunit may be used to map the sidelink control channel; or if one of the M frequency domain units includes the second frequency domain subunit and the third frequency domain subunit, but does not include the first frequency domain subunit, the third frequency domain subunit may be used to map the sidelink control channel; or if one of the M frequency domain units includes the third frequency domain subunit, but does not include the first frequency domain subunit and the second frequency domain subunit, the third frequency domain subunit may be used to map the sidelink control channel. According to the foregoing mapping rule, in the M frequency domain units, the frequency domain subunit for mapping the sidelink control channel may include the third frequency domain subunit. In addition, optionally, the configuration information in S301 may further be used to configure a quantity of PRBs occupied by the sidelink control channel and/or a quantity of OFDM symbols occupied by the sidelink control channel, and the first UE may map the sidelink control channel based on the quantity.

For example, the sidelink control channel may be mapped to the third frequency domain subunit in at least one of the M frequency domain units, and the at least one frequency domain unit may be a part or all of the M frequency domain units. Optionally, a quantity of at least one frequency domain unit is 1. For example, the frequency domain unit is the 1^{st} frequency domain unit in the M frequency domain units, or may be another frequency domain unit in the M frequency domain units. A frequency domain unit included in the at least one frequency domain unit may be negotiated by the first UE and the second UE, or may be notified by the first UE to the second UE in advance, or may be notified by the second UE to the first UE in advance, or may be configured by the network device or another UE. For example, the network device or another UE may configure the frequency domain unit while configuring the first resource pool. If the sidelink control channel is mapped to the third frequency domain subunit, regardless of whether the first resource includes the first frequency domain subunit or the second frequency domain subunit, the second UE only needs to detect the sidelink control channel in the third frequency domain subunit. This increases a receiving success rate of the sidelink control channel.

Optionally, to assist the second UE in decoding the first SL information, if the 1^{st} frequency domain unit in the M frequency domain units includes the second frequency domain subunit, the third frequency domain subunit, and the first frequency domain subunit, the sidelink control information may indicate whether the first resource includes the first frequency domain subunit in the 1^{st} frequency domain unit in the M frequency domain units, or if the 1^{st} frequency domain unit in the M frequency domain units includes the second frequency domain subunit and the third frequency domain subunit, but does not include the first frequency domain subunit, the sidelink control information may indicate whether the first resource includes the second frequency domain subunit in the 1^{st} frequency domain unit in the M frequency domain units; and/or if the M^{th} frequency domain unit in the M frequency domain units includes the second frequency domain subunit, the third frequency domain subunit, and the first frequency domain subunit, the sidelink control information may indicate whether the first resource includes the second frequency domain subunit in the M^{th} frequency domain unit in the M frequency domain units, or if the M^{th} frequency domain unit in the M frequency domain units includes the first frequency domain subunit and the third frequency domain subunit, but does not include the second frequency domain subunit, the sidelink control information may indicate whether the first resource includes the first frequency domain subunit in the M^{th} frequency domain unit in the M frequency domain units. Alternatively, the sidelink control information may indicate whether a GB is reserved in the 1^{st} frequency domain unit in the M frequency domain units, and/or indicate whether a GB is reserved in the M^{th} frequency domain unit in the M frequency domain units. If M=1, the sidelink control information may indicate whether the first resource includes the first frequency domain subunit and/or the second frequency domain subunit in the frequency domain unit. The second UE can determine, based on an indication of the sidelink control information, the frequency domain subunit included in the first resource, so that the first SL information can be correctly decoded. For example, the sidelink control information may include first indication information, and the first indication information may indicate a status of the frequency domain subunit included in the first resource. The first indication information may occupy one or more bits (bit). For example, as shown in Table 1, an implementation of the first indication information is described by using an example in which the first indication information occupies two bits.

**Table 1**

| First indication information | Indicated content |
|---|---|
| 00 | including the first frequency domain subunit in a 1^{st} frequency domain subunit, and including the second frequency domain subunit in an M^{th} frequency domain subunit |
| 01 | including the first frequency domain subunit in a 1^{st} frequency domain subunit, and excluding the second frequency domain subunit in an M^{th} frequency domain subunit |
| 10 | excluding the first frequency domain subunit in a 1^{st} frequency domain subunit, and including the second frequency domain subunit in an M^{th} frequency domain subunit |
| 11 | excluding the first frequency domain subunit in a 1^{st} frequency domain subunit, and excluding the second frequency domain subunit in an M^{th} frequency domain subunit |

For example, in this embodiment of this application, a value of the first indication information may be determined from one or more values in Table 1. It can be seen from Table 1 that, for the second UE, the frequency domain subunit included in the first resource can be determined based on the value of the first indication information. The implementation of the first indication information is not limited to Table 1. For example, the first indication information may alternatively occupy fewer or more bits, and there may be a different indication manner. This is not specifically limited. In addition, in Table 1, an example in which each frequency domain unit in the first resource pool includes a first frequency domain subunit, a second frequency domain subunit, and a third frequency domain subunit may be used. If the first resource pool further includes another type of frequency domain unit (for example, the first resource pool further includes one type of frequency domain unit, and the frequency domain unit includes only a third frequency domain subunit; or the first resource pool further includes one type of frequency domain unit, and the frequency domain unit includes a third frequency domain subunit, and includes a second frequency domain subunit or a first frequency domain subunit), the first indication information may occupy more bits. Details are not described again.

In this embodiment of this application, the frequency domain unit is divided into a plurality of frequency domain subunits, and the first UE may determine, based on different cases, whether the GB needs to be reserved. This avoids a resource waste caused by system-level GB configuration, improves flexibility of resource selection, and reduces a probability of resource collision and impact of self-interference.

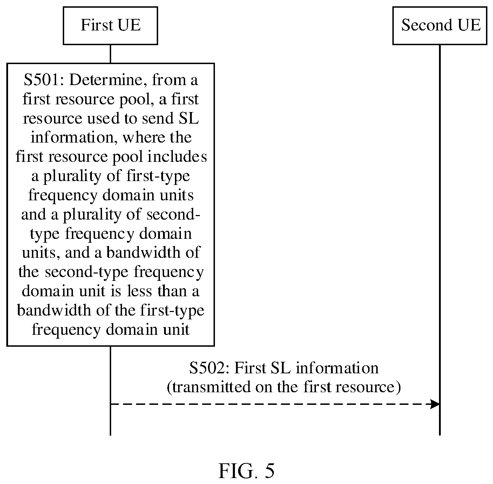

In the embodiment shown in FIG. 3, the frequency domain unit is divided into the frequency domain subunits, so that flexible resource selection is implemented. In addition, an embodiment of this application provides another communication method. According to the method, an obj ective of flexible resource selection can also be achieved. FIG. 5 is a flowchart of the method.

S501: First UE determines, from a first resource pool, a first resource used to send SL information. For example, if the first UE is to send first SL information, the first UE may determine, from the first resource pool, a resource used to send the first SL information, where the resource determined by the first UE is referred to as the first resource. In this embodiment of this application, the SL information includes, for example, one or more of SL data, an SL reference signal, or SL control information. This is not specifically limited.

The first resource pool is an SL resource pool. For a process of configuring the first resource pool, refer to related descriptions of S301 in the embodiment shown in FIG. 3. Optionally, the process of configuring the first resource pool may be performed before S501.

The first resource pool may include one or more time domain units, and may further include W frequency domain units. The W frequency domain units may include one or more first-type frequency domain units and one or more second-type frequency domain units. For example, if two frequency domain units in the first resource pool are of a first type, bandwidths of the two frequency domain units are the same or different. For another example, if two frequency domain units in the first resource pool are of a second type, bandwidths of the two frequency domain units are the same or different. A bandwidth of the second-type frequency domain unit may be less than a bandwidth of the first-type frequency domain unit. For example, the first-type frequency domain unit may include E₁ frequency domain subunits, and the second-type frequency domain unit may include E₂ frequency domain subunits, where E₁ may be less than E₂. For example, E₁ ∈{10, 12, 15, 20, 25, 50, 75, 100}, and E₂ ∈{5, 6, 7, 8, 9}. Optionally, a quantity of frequency domain subunits included in the second-type frequency domain unit may be greater than or equal to a quantity of frequency domain subunits required by a GB, so that the second-type frequency domain unit may be used to carry the SL information, or may be used as the GB. In addition, the E₁ frequency domain subunits may be contiguous frequency domain subunits, or the E₂ frequency domain subunits may be contiguous frequency domain subunits. In this embodiment of this application, the frequency domain subunit is, for example, a subcarrier, a PRB, an RB, or an RE.

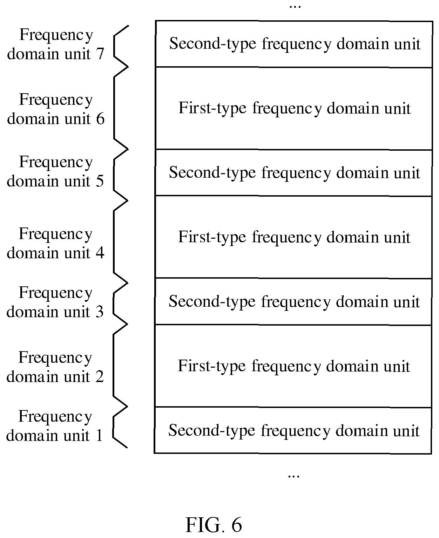

Optionally, in the first resource pool, the first-type frequency domain units and the second-type frequency domain units may be interlaced or spaced apart. For example, an i^{th} frequency domain unit in the first resource pool is a first-type frequency domain unit, and an (i+1)^{th} frequency domain unit in the first resource pool is a second-type frequency domain unit; or an i^{th} frequency domain unit in the first resource pool is a second-type frequency domain unit, and an (i+1)^{th} frequency domain unit in the first resource pool is a first-type frequency domain unit, where i is a positive integer less than W. For example, as shown in FIG. 6, every two first-type frequency domain units closest in frequency domain are spaced apart by one second-type frequency domain unit, and every two second-type frequency domain units closest in frequency domain are also spaced apart by one first-type frequency domain unit. This interlacing manner is more conducive to GB reservation.

The first resource may include M frequency domain units in the W frequency domain units, and M is a positive integer less than or equal to W. The M frequency domain units may include N first-type frequency domain units and K second-type frequency domain units, N is an integer greater than or equal to 0 and less than or equal to M, and K is an integer greater than or equal to 0 and less than or equal to M. N may be equal to K, or may be not equal to K. How to select the M frequency domain units may be determined by the first UE based on different factors. The following provides descriptions by using examples.
1. The M frequency domain units are determined based on an operating mode.

If the first UE sends the first SL information in a first duplex mode, and second UE may further send second SL information (a receive end of the second SL information may be the first UE or another UE) in the first duplex mode in addition to receiving the first SL information, a type of a 1^{st} frequency domain unit in the M frequency domain units may be the first type or the second type, and a type of an M^{th} frequency domain unit in the M frequency domain units may be the first type or the second type. In other words, both the first UE and the second UE operate in the first duplex mode. In the first duplex mode, only sending or only receiving is performed in a same slot, and there is no self-interference problem. Therefore, no GB needs to be reserved, and types of the M frequency domain units may not be limited.

If the first UE sends the first SL information in a first duplex mode, and second UE may further send second SL information (a receive end of the second SL information may be the first UE or another UE) in a second duplex mode in addition to receiving the first SL information, a type of a 1^{st} frequency domain unit in the M frequency domain units may be the first type, and a type of an M^{th} frequency domain unit in the M frequency domain units may be the first type. Alternatively, if the first UE sends the first SL information in a second duplex mode, and second UE may further send second SL information (a receive end of the second SL information may be the first UE or another UE) in a first duplex mode in addition to receiving the first SL information, a type of a 1^{st} frequency domain unit in the M frequency domain units may be the first type, and a type of an M^{th} frequency domain unit in the M frequency domain units may be the first type. Alternatively, if the first UE sends the first SL information in a second duplex mode, and second UE may further send second SL information (a receive end of the second SL information may be the first UE or another UE) in the second duplex mode in addition to receiving the first SL information, a type of a 1^{st} frequency domain unit in the M frequency domain units may be the first type, and a type of an M^{th} frequency domain unit in the M frequency domain units may be the first type. If the first UE and/or the second UE operate/operates in the second duplex mode, a GB may be reserved. If the types of the 1^{st} frequency domain unit and the M^{th} frequency domain unit are both the first type, there is at least one second-type frequency domain unit spaced between the 1^{st} frequency domain unit and a first-type frequency domain unit that is closest to the 1^{st} frequency domain unit in frequency domain, and there is also at least one second-type frequency domain unit spaced between the M^{th} frequency domain unit and a first-type frequency domain unit that is closest to the M^{th} frequency domain unit in frequency domain (as shown in FIG. 6). Therefore, it can be ensured that at least one second-type frequency domain unit is spaced apart as a GB between a transmit frequency domain unit and a receive frequency domain unit of the second UE.

The M frequency domain units can be determined based on operating modes of the first UE and the second UE. For example, a type of an edge frequency domain unit in the M frequency domain units can be determined, and there is no need to consider excessive factors. Therefore, the determining manner is simple. The edge frequency domain unit in the M frequency domain units may include the 1^{st} frequency domain unit and/or the M^{th} frequency domain unit in the M frequency domain units.

2. The M frequency domain units are determined based on resource selection.
(1) The first UE sends the first SL information in a first duplex mode, second UE further sends second SL information (a receive end of the second SL information may be the first UE or another UE) on a second resource in a second duplex mode in addition to receiving the first SL information, and a time domain resource of the first resource is completely or partially the same as a time domain resource of the second resource. In this case, the first UE may consider a conflict between the first resource and the second resource.

For example, the first UE may perform a sensing process, detect SCI from another UE, and determine, based on resource reservation information carried in the SCI, a sending resource reserved by the another UE. If a time domain resource included in the sending resource reserved by the another UE is completely or partially the same as the time domain resource of the first resource, it indicates that SL information may need to be transmitted simultaneously on the first resource and the resource reserved by the another UE, and the first UE may determine the M frequency domain units based on the resource reserved by the another UE. For example, the first UE receives SCI from the second UE, and determines, based on resource reservation information carried in the SCI, that the second UE reserves the second resource in the first resource pool. For example, if the second resource includes Q frequency domain units in the first resource pool, Q is an integer greater than or equal to 0, and the time domain resource of the second resource is completely or partially the same as the time domain resource of the first resource, the first UE may make a frequency domain resource of the first resource neither overlap nor adjacent to a frequency domain resource of the second resource. For example, the first UE makes the M frequency domain units not include any frequency domain unit in the Q frequency domain units and not include a frequency domain unit adjacent to any frequency domain unit in the Q frequency domain units, so that the M frequency domain units neither overlap nor are adjacent to the Q frequency domain units. This avoids a resource conflict, and also reduces self-interference of the second UE.

Optionally, if the time domain resource of the second resource is different from the time domain resource of the first resource, the frequency domain resource of the first resource may neither overlap nor be adjacent to the frequency domain resource of the second resource, for example, the M frequency domain units may not include any frequency domain unit in the Q frequency domain units, and may not include a frequency domain unit adjacent to any frequency domain unit in the Q frequency domain units; or the frequency domain resource of the first resource may overlap and/or may be adjacent to the frequency domain resource of the second resource, for example, the M frequency domain units may include any frequency domain unit in the Q frequency domain units, and/or include a frequency domain unit adjacent to any frequency domain unit in the Q frequency domain units. In other words, if the time domain resources are different, it indicates that the SL information is sent at different times, and a self-interference problem usually does not occur. Therefore, selection of the M frequency domain units may not be limited.

(2) The first UE sends the first SL information in a second duplex mode, and the second UE further sends second SL information on a second resource in a first duplex mode in addition to receiving the first SL information. In addition, the first UE further receives third SL information (a transmit end of the third SL information may be the second UE or another UE) on a third resource in addition to sending the first SL information, and a time domain resource of the third resource is partially or completely the same as a time domain resource of the first resource. In this case, because the second UE sends the second SL information in the first duplex mode, the first UE may not need to consider a conflict between the first resource and a transmission resource of the second SL information. However, the first UE may consider a conflict between the first resource and the third resource.

For example, if the third resource includes P frequency domain units in the first resource pool, P is an integer greater than or equal to 0, and the time domain resource of the third resource is completely or partially the same as the time domain resource of the first resource, the first UE may make a frequency domain resource of the first resource neither overlap nor adjacent to a frequency domain resource of the third resource. For example, the first UE makes the M frequency domain units not include any frequency domain unit in the P frequency domain units and not include a frequency domain unit adjacent to any frequency domain unit in the P frequency domain units, so that the M frequency domain units neither overlap nor are adjacent to the P frequency domain units. This avoids a resource conflict, and also reduces self-interference of the first UE.

Optionally, if the time domain resource of the third resource is different from the time domain resource of the first resource, the frequency domain resource of the first resource may neither overlap nor be adjacent to the frequency domain resource of the third resource, for example, the M frequency domain units may not include any frequency domain unit in the P frequency domain units, and may not include a frequency domain unit adjacent to any frequency domain unit in the P frequency domain units; or the frequency domain resource of the first resource may overlap and/or may be adjacent to the frequency domain resource of the third resource, for example, the M frequency domain units may include any frequency domain unit in the P frequency domain units, and/or include a frequency domain unit adjacent to any frequency domain unit in the P frequency domain units. In other words, if the time domain resources are different, it indicates that the SL information is sent and received at different times, and a self-interference problem usually does not occur. Therefore, selection of the M frequency domain units may not be limited.

(3) The first UE sends the first SL information in a second duplex mode, and the second UE further sends second SL information (a receive end of the second SL information may be the first UE or another UE) on a second resource in the second duplex mode in addition to receiving the first SL information. In addition, the first UE further receives third SL information (a transmit end of the third SL information may be the second UE or another UE) on a third resource in addition to sending the first SL information. For example, a time domain resource of the second resource is partially or completely the same as a time domain resource of the first resource, and/or a time domain resource of the third resource is partially or completely the same as the time domain resource of the first resource. In this case, the first UE may consider a conflict between the first resource and the second resource, and/or consider a conflict between the first resource and the third resource.

For example, the first UE receives SCI from the second UE, and determines, based on resource reservation information carried in the SCI, that the second UE reserves the second resource. For example, the second resource belongs to the first resource pool, the second resource includes Q frequency domain units in the first resource pool, and Q is an integer greater than or equal to 0. In addition, the third resource includes P frequency domain units in the first resource pool, and P is an integer greater than or equal to 0. For example, the time domain resource of the second resource is completely or partially the same as the time domain resource of the first resource, and/or the time domain resource of the third resource is completely or partially the same as the time domain resource of the first resource. In this case, the first UE may make a frequency domain resource of the first resource neither overlap nor adjacent to a frequency domain resource of the second resource, and/or make the frequency domain resource of the first resource neither overlap nor adjacent to a frequency domain resource of the third resource. For example, the first UE makes the M frequency domain units not include any frequency domain unit in the Q frequency domain units and not include a frequency domain unit adjacent to any frequency domain unit in the Q frequency domain units, and/or makes the M frequency domain units not include any frequency domain unit in the P frequency domain units and not include a frequency domain unit adjacent to any frequency domain unit in the P frequency domain units, so that the M frequency domain units neither overlap nor are adjacent to the Q frequency domain units and/or the P frequency domain units. This avoids a resource conflict, and also reduces interference.

Optionally, if the time domain resource of the second resource is different from the time domain resource of the first resource, the frequency domain resource of the first resource may neither overlap nor be adjacent to the frequency domain resource of the second resource, for example, the M frequency domain units may not include any frequency domain unit in the Q frequency domain units, and may not include a frequency domain unit adjacent to any frequency domain unit in the Q frequency domain units; or the frequency domain resource of the first resource may overlap and/or may be adjacent to the frequency domain resource of the second resource, for example, the M frequency domain units may include any frequency domain unit in the Q frequency domain units, and/or include a frequency domain unit adjacent to any frequency domain unit in the Q frequency domain units.

Optionally, if the time domain resource of the third resource is different from the time domain resource of the first resource, the frequency domain resource of the first resource may neither overlap nor be adjacent to the frequency domain resource of the third resource, for example, the M frequency domain units may not include any frequency domain unit in the P frequency domain units, and may not include a frequency domain unit adjacent to any frequency domain unit in the P frequency domain units; or the frequency domain resource of the first resource may overlap and/or may be adjacent to the frequency domain resource of the third resource, for example, the M frequency domain units may include any frequency domain unit in the P frequency domain units, and/or include a frequency domain unit adjacent to any frequency domain unit in the P frequency domain units.

In addition, if the first UE sends the first SL information in a first duplex mode, and the second UE further sends second SL information (a receive end of the second SL information may be the first UE or another UE) on a second resource in the first duplex mode in addition to receiving the first SL information, for a processing manner, refer to the foregoing description of determining the M frequency domain units based on the operating mode in the first case.

Optionally, the method further includes S502: The first UE sends the first SL information to the second UE on the first resource. Correspondingly, the second UE receives the first SL information from the first UE on the first resource. After determining the first resource, the first UE may send the first SL information on the first resource. Optionally, a network device or another UE may alternatively configure the first resource pool for the second UE (for example, send, to the second UE, configuration information used to configure the first resource pool), and the second UE can receive the first SL information by sensing the first resource pool.

In the foregoing manner, the second-type frequency domain unit may be used to send the SL information, or may be used as the GB (for example, not occupied by the SL information). Therefore, the first UE can flexibly select a resource used to send the SL information, thereby improving flexibility of resource selection. In addition, this manner can reduce impact of self-interference and a probability of a resource conflict. In addition, after this manner is used, no fixed GB needs to be configured by a system. This can reduce a resource waste.

Optionally, the first UE may further send sidelink control information to the second UE, for example, SCI. The SCI may be carried on a sidelink control channel and/or a sidelink data channel. The sidelink control channel is, for example, a PSCCH, and the sidelink data channel is, for example, a PSSCH. The sidelink control information may be included in the first SL information, or may be information other than the first SL information.

As described above, the bandwidth of the second-type frequency domain unit is less than the bandwidth of the first-type frequency domain unit. For example, the quantity of frequency domain subunits included in the second-type frequency domain unit is less than a quantity of frequency domain subunits included in the first-type frequency domain unit. Because the second-type frequency domain unit includes a small quantity of frequency domain subunits, if the sidelink control channel is mapped to the second-type frequency domain unit, the sidelink control channel also occupies a small quantity of frequency domain subunits. This may be understood as that a quantity of frequency domain subunits that are in the second-type frequency domain unit and that may be used for a sidelink control channel is less than a quantity of frequency domain subunits that are in the first-type frequency domain unit and that may be used for a sidelink control channel. To improve decoding performance of the sidelink control channel, the sidelink control channel mapped to the second-type frequency domain unit may occupy a large quantity of time domain resources (for example, occupy a large quantity of orthogonal frequency division multiplexing (orthogonal frequency division multiplexing, OFDM) symbols). For example, the sidelink control channel mapped to the second-type frequency domain unit occupies more time domain resources than the sidelink control channel mapped to the first-type frequency domain unit. As a result, duration in which a receive end of the sidelink control channel (for example, the second UE) decodes the sidelink control channel on the second-type frequency domain unit is greater than duration in which the receive end decodes the sidelink control channel on the first-type frequency domain unit. This is equivalent to increasing a processing delay.

To resolve this problem, optionally, if N is greater than or equal to 1, in this embodiment of this application, the sidelink control channel carrying the sidelink control information may be mapped to at least one first-type frequency domain unit in the M frequency domain units. Because the first-type frequency domain unit includes a large quantity of frequency domain subunits, a large quantity of frequency domain subunits can be used to carry the sidelink control channel. This can improve decoding performance of the sidelink control channel, and can reduce a processing delay.

For example, a quantity of at least one first-type frequency domain unit is 1, and the frequency domain unit is a 1^{st} first-type frequency domain unit in the M frequency domain units, or the frequency domain unit may be any first-type frequency domain unit in the M frequency domain units. Alternatively, a quantity of at least one first-type frequency domain unit may be greater than 1, and the quantity, a location, and the like of the at least one first-type frequency domain unit are not limited.

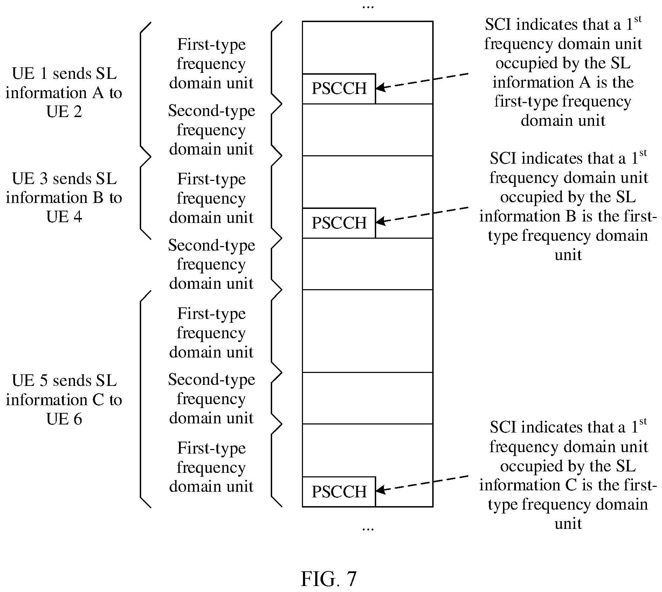

Optionally, the sidelink control information may indicate a type of the 1^{st} frequency domain unit in the M frequency domain units, for example, indicate that the type of the 1^{st} frequency domain unit is the first type or the second type. FIG. 7 shows an example of content indicated by sidelink control information. For example, FIG. 7 includes three groups of SL information sending processes. One group of SL information sending processes is that UE 1 sends SL information A to UE 2, and the UE 1 further sends sidelink control information to the UE 2. The sidelink control information is carried on a PSCCH, and the sidelink control information indicates that a 1^{st} frequency domain unit occupied by the SL information A is a second-type frequency domain unit. In FIG. 7, an example in which the SL information A occupies two frequency domain units is used. For example, both the UE 1 and the UE 2 operate in a TDD mode. A second group of SL information sending processes included in FIG. 7 is that UE 3 sends SL information B to UE 4, and the UE 3 further sends sidelink control information to the UE 4. The sidelink control information is carried on a PSCCH, and the sidelink control information indicates that a 1^{st} frequency domain unit occupied by the SL information B is a first-type frequency domain unit. In FIG. 7, an example in which the SL information B occupies one frequency domain unit is used. For example, the UE 3 operates in the TDD mode, and the UE 4 operates in an SBFD mode. A third group of SL information sending processes included in FIG. 7 is that UE 5 sends SL information C to UE 6, and the UE 5 further sends sidelink control information to the UE 6. The sidelink control information is carried on a PSCCH, and the sidelink control information indicates that a 1^{st} frequency domain unit occupied by the SL information C is a first-type frequency domain unit. In FIG. 7, an example in which the SL information C occupies three frequency domain units is used. For example, the UE 5 operates in the SBFD mode, and the UE 6 operates in the SBFD mode.

The receive end of the sidelink control information (for example, the second UE) may determine the type of the 1^{st} frequency domain unit based on an indication of the sidelink control information, and therefore may determine the M frequency domain units. For example, the sidelink control information may further indicate a value of M, and the second UE may further determine at least one frequency domain unit occupied by the sidelink control channel. The second UE may determine, with reference to the type of the 1^{st} frequency domain unit, the at least one frequency domain unit occupied by the sidelink control channel, and the value of M, which frequency domain units are the M frequency domain units.

In this embodiment of this application, frequency domain units are classified into different types. If the first UE needs to reserve a GB, the second-type frequency domain unit may be reserved as a GB as much as possible. The bandwidth of the second-type frequency domain unit is small, so that the GB is reserved, impact of self-interference is reduced, and resources can be saved. The first-type frequency domain unit with a large bandwidth may be used as much as possible, to transmit the SL information. This improves resource utilization. In addition, the second-type frequency domain unit may be used as the GB, or may be used to transmit the SL information. This avoids a resource waste caused by system-level GB configuration, and also improves flexibility of resource selection.

Optionally, the embodiment shown in FIG. 3 is applicable to a case in which a frequency domain unit includes a large quantity of PRBs (or subcarriers, or RBs, or REs). In the embodiment shown in FIG. 3, one frequency domain unit needs to be divided into a plurality of frequency domain subunits, and a first frequency domain subunit and/or a second frequency domain subunit may be used as a GB, so that a quantity of PRBs (or subcarriers, or RBs, or REs) used to transmit the SL information is small. Therefore, if one frequency domain unit includes a large quantity of PRBs (or subcarriers, or RBs, or REs), it can be ensured that there are sufficient PRBs (or subcarriers, or RBs, or REs) used to transmit the SL information. However, in the embodiment shown in FIG. 5, a quantity of PRBs (or subcarriers, or RBs, or REs) included in a frequency domain unit is not limited. Alternatively, the embodiment shown in FIG. 3 may be applied even if the frequency domain unit includes a small quantity of PRBs (or subcarriers, RBs, or REs). This is not limited.

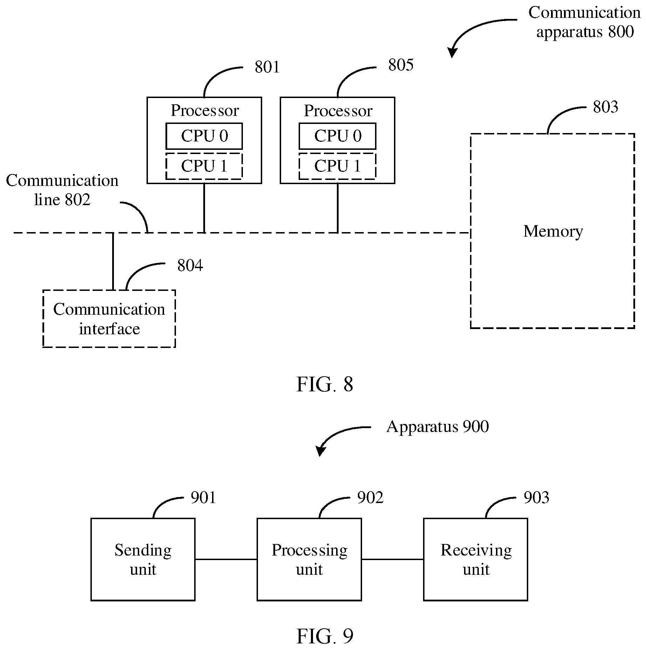

FIG. 8 is a diagram of a structure of a communication apparatus according to an embodiment of this application. The communication apparatus 800 may be a circuit system of the first terminal device or the first UE in the embodiment shown in FIG. 3 or FIG. 5, and is configured to implement the method corresponding to the first UE in the foregoing method embodiment. Alternatively, the communication apparatus 800 may be a circuit system of the second UE in the embodiment shown in FIG. 3 or FIG. 5, and is configured to implement the method corresponding to the second UE in the foregoing method embodiment. For specific functions, refer to descriptions of the foregoing method embodiments. For example, a circuit system is a chip system.

The communication apparatus 800 includes at least one processor 801. The processor 801 may be configured to perform internal processing of the apparatus, to implement a specific control processing function. Optionally, the processor 801 includes instructions. Optionally, the processor 801 may store data. Optionally, different processors may be independent devices, may be located at different physical locations, or may be located on different integrated circuits. Optionally, different processors may be integrated into one or more processors, for example, integrated into one or more integrated circuits.

Optionally, the communication apparatus 800 includes one or more memories 803, configured to store instructions. Optionally, the memory 803 may further store data. The processor and the memory may be separately disposed, or may be integrated together.

Optionally, the communication apparatus 800 includes a communication line 802 and at least one communication interface 804. Because the memory 803, the communication line 802, and the communication interface 804 are all optional, the memory 803, the communication line 802, and the communication interface 804 are all represented by dashed lines in FIG. 8.

Optionally, the communication apparatus 800 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 800 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 801 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 802 may include a path for transmitting information between the foregoing components.

The communication interface 804 is configured to communicate, by using any apparatus such as a transceiver, with another device or a communication network, for example, an ethernet, a radio access network (radio access network, RAN), a wireless local area network (wireless local area network, WLAN), or a wired access network.

The memory 803 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be accessed by a computer and that can be configured to carry or store expected program code in an instruction form or in a data structure form, but is not limited thereto. The memory 803 may exist independently, and is connected to the processor 801 via the communication line 802. Alternatively, the memory 803 may be integrated with the processor 801.

The memory 803 is configured to store computer-executable instructions for executing the solution of this application, and the processor 801 controls execution. The processor 801 is configured to execute the computer-executable instructions stored in the memory 803, to implement the step performed by the first UE in the embodiment shown in FIG. 3 or FIG. 5, or implement the step performed by the second UE in the embodiment shown in FIG. 3 or FIG. 5.

Optionally, the computer-executable instructions in this embodiment of this application may also be referred to as application program code. This is not specifically limited in embodiments of this application.

During specific implementation, in an embodiment, the processor 801 may include one or more CPUs, for example, a CPU 0 and a CPU 1 shown in FIG. 8.

During specific implementation, in an embodiment, the communication apparatus 800 may include a plurality of processors, for example, the processor 801 and a processor 805 in FIG. 8. Each of these processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 8 is a chip, for example, a chip of a sending device, a chip of a first receiving device, or a chip of a second receiving device, the chip includes the processor 801 (may further include the processor 805), the communication line 802, and the communication interface 804. Optionally, the chip may include the memory 803. Specifically, the communication interface 804 may be an input interface, a pin, a circuit, or the like. The memory 803 may be a register, a cache, or the like. The processor 801 and the processor 805 each may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. In actual implementation, there may be another division manner. For example, when division into functional modules is performed based on corresponding functions, FIG. 9 is a diagram of an apparatus. The apparatus 900 may be the first UE or the second UE in the foregoing method embodiments, or a chip in the first UE or a chip in the second UE. The apparatus 900 includes a sending unit 901, a processing unit 902, and a receiving unit 903.

It should be understood that the apparatus 900 may be configured to implement the step performed by the first UE or the second UE in the communication method in embodiments of this application. For related features, refer to the embodiment shown in FIG. 3 or FIG. 5. Details are not described herein again.

Optionally, functions/implementation processes of the sending unit 901, the receiving unit 903, and the processing unit 902 in FIG. 9 may be implemented by the processor 801 in FIG. 8 by invoking the computer-executable instructions stored in the memory 803. Alternatively, functions/implementation processes of the processing unit 902 in FIG. 9 may be implemented by the processor 801 in FIG. 8 by invoking the computer-executable instructions stored in the memory 803, and functions/implementation processes of the sending unit 901 and the receiving unit 903 in FIG. 9 may be implemented by the communication interface 804 in FIG. 8.

Optionally, when the apparatus 900 is a chip or a circuit, the functions/implementation processes of the sending unit 901 and the receiving unit 903 may alternatively be implemented by a pin, a circuit, or the like.

This application further provides a computer-readable storage medium. The computer-readable storage medium stores a computer program or instructions. When the computer program or the instructions are run, the method performed by the first UE or the second UE in the foregoing method embodiment is implemented. In this way, the functions in the foregoing embodiments may be implemented in a form of a software functional unit and sold or used as an independent product. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first UE or the second UE in any one of the foregoing method embodiments.

An embodiment of this application further provides a processing apparatus, including a processor and an interface. The processor is configured to perform the method performed by the first UE or the second UE in any one of the foregoing method embodiments.

All or some of the foregoing embodiments may be implemented by software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive, (solid state disk, SSD)), or the like.

Various illustrative logic units and circuits described in embodiments of this application may implement or operate the described functions by designing a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware component, or any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to the processor, so that the processor can read information from the storage medium and write information to the storage medium. Optionally, the storage medium may alternatively be integrated into the processor. The processor and the storage medium may be disposed in the ASIC, and the ASIC may be disposed in a terminal device. Optionally, the processor and the storage medium may alternatively be disposed in different components of the terminal device.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise stated or there is a logical conflict, terms and/or descriptions in different embodiments are consistent and may be mutually referenced, and technical features in different embodiments may be combined based on an internal logical relationship thereof, to form a new embodiment.

It may be understood that in embodiments of this application, the first UE or the second UE may perform a part or all of the steps in embodiments of this application. The steps or operations are merely examples. In embodiments of this application, other operations or variations of various operations may be further performed. In addition, the steps may be performed in a sequence different from a sequence presented in embodiments of this application, and not all operations in embodiments of this application need to be performed.

## Claims

1. A communication method, wherein the method is applied to a first terminal device, and comprises:
determining, from a first resource pool, a first resource used to send sidelink information, wherein the first resource pool comprises N frequency domain units, and N is a positive integer, wherein
each of the N frequency domain units comprises a first frequency domain subunit, a second frequency domain subunit, and a third frequency domain subunit; or
a 1^{st} frequency domain unit in the N frequency domain units comprises a second frequency domain subunit and a third frequency domain subunit, and/or an N^{th} frequency domain unit in the N frequency domain units comprises a first frequency domain subunit and a third frequency domain subunit, and each of a 2^{nd} frequency domain unit to an (N-1)^{th} frequency domain unit in the N frequency domain units comprises a first frequency domain subunit, a second frequency domain subunit, and a third frequency domain subunit; or
a 1^{st} frequency domain unit in the N frequency domain units comprises a third frequency domain subunit, and/or an N^{th} frequency domain unit in the N frequency domain units comprises a third frequency domain subunit, and each of a 2^{nd} frequency domain unit to an (N-1)^{th} frequency domain unit in the N frequency domain units comprises a first frequency domain subunit, a second frequency domain subunit, and a third frequency domain subunit.

2. The method according to claim 1, wherein the first frequency domain subunit is adjacent to the third frequency domain subunit, and the third frequency domain subunit is adjacent to the second frequency domain subunit.

3. The method according to claim 1 or 2, wherein the method further comprises:
sending first sidelink information to a second terminal device on the first resource.

4. The method according to any one of claims 1 to 3, wherein the method further comprises:
receiving configuration information, wherein the configuration information is used to configure the first resource pool.

5. The method according to any one of claims 1 to 4, wherein each of the N frequency domain units comprised in the first resource pool comprises the first frequency domain subunit, the second frequency domain subunit, and the third frequency domain subunit, the first resource comprises a part or all of frequency domain resources in M frequency domain units in the N frequency domain units, and M≥2, wherein
the first resource comprises the second frequency domain subunit and the third frequency domain subunit in a 1^{st} frequency domain unit in the M frequency domain units; and/or
the first resource comprises the first frequency domain subunit and the third frequency domain subunit in an M^{th} frequency domain unit in the M frequency domain units.

6. The method according to claim 5, wherein M≥3; and
the first resource comprises the first frequency domain subunit, the second frequency domain subunit, and the third frequency domain subunit in each of a 2^{nd} frequency domain unit to an (M-1)^{th} frequency domain unit in the M frequency domain units.

7. The method according to any one of claims 1 to 6, wherein each of the N frequency domain units comprised in the first resource pool comprises the first frequency domain subunit, the second frequency domain subunit, and the third frequency domain subunit, and the first resource comprises a part or all of a frequency domain resource in the M frequency domain units in the N frequency domain units; and when the first terminal device uses a first duplex mode,
the first resource comprises the first frequency domain subunit, the second frequency domain subunit, and the third frequency domain subunit in the 1^{st} frequency domain unit in the M frequency domain units; and/or
the first resource comprises the first frequency domain subunit, the second frequency domain subunit, and the third frequency domain subunit in the M^{th} frequency domain unit in the M frequency domain units.

8. The method according to any one of claims 1 to 6, wherein each of the N frequency domain units comprised in the first resource pool comprises the first frequency domain subunit, the second frequency domain subunit, and the third frequency domain subunit, and the first resource comprises a part or all of a frequency domain resource in the M frequency domain units in the N frequency domain units; and when the first terminal device uses a second duplex mode,
the first resource comprises the second frequency domain subunit and the third frequency domain subunit in the 1^{st} frequency domain unit in the M frequency domain units, and does not comprise the first frequency domain subunit in the 1^{st} frequency domain unit in the M frequency domain units; and/or
the first resource comprises the first frequency domain subunit and the third frequency domain subunit in the M^{th} frequency domain unit in the M frequency domain units, and does not comprise the second frequency domain subunit in the M^{th} frequency domain unit in the M frequency domain units.

9. The method according to any one of claims 1 to 6, wherein each of the N frequency domain units comprised in the first resource pool comprises the first frequency domain subunit, the second frequency domain subunit, and the third frequency domain subunit, and the first resource comprises a part or all of a frequency domain resource in the M frequency domain units in the N frequency domain units; and when the first terminal device uses a first duplex mode, and the second terminal device uses the first duplex mode,
the first resource comprises the first frequency domain subunit, the second frequency domain subunit, and the third frequency domain subunit in the 1^{st} frequency domain unit in the M frequency domain units; and/or
the first resource comprises the first frequency domain subunit, the second frequency domain subunit, and the third frequency domain subunit in the M^{th} frequency domain unit in the M frequency domain units.

10. The method according to any one of claims 1 to 6, wherein each of the N frequency domain units comprised in the first resource pool comprises the first frequency domain subunit, the second frequency domain subunit, and the third frequency domain subunit, and the first resource comprises a part or all of a frequency domain resource in the M frequency domain units in the N frequency domain units; and when the first terminal device uses a first duplex mode, the second terminal device uses a second duplex mode, the second terminal device reserves a second resource in the first resource pool, and a time domain resource of the first resource is partially or completely the same as a time domain resource of the second resource,
if the 1^{st} frequency domain unit in the M frequency domain units is adjacent to a frequency domain resource of the second resource, the first resource comprises the third frequency domain subunit in the 1^{st} frequency domain unit in the M frequency domain units, and does not comprise the first frequency domain subunit or the second frequency domain subunit in the 1^{st} frequency domain unit in the M frequency domain units, or if the 1^{st} frequency domain unit in the M frequency domain units is not adjacent to a frequency domain resource of the second resource, the first resource comprises the first frequency domain subunit, the second frequency domain subunit, and the third frequency domain subunit in the 1^{st} frequency domain unit in the M frequency domain units; and/or
if the M^{th} frequency domain unit in the M frequency domain units is adj acent to the frequency domain resource of the second resource, the first resource comprises the third frequency domain subunit in the M^{th} frequency domain unit in the M frequency domain units, and does not comprise the first frequency domain subunit or the second frequency domain subunit in the M^{th} frequency domain unit in the M frequency domain units, or if the M^{th} frequency domain unit in the M frequency domain units is not adjacent to the frequency domain resource of the second resource, the first resource comprises the first frequency domain subunit, the second frequency domain subunit, and the third frequency domain subunit in the M^{th} frequency domain unit in the M frequency domain units.

11. The method according to claim 10, wherein the second resource comprises a part or all of a frequency domain resource in K frequency domain units in the first resource pool, and K is an integer greater than or equal to 0, wherein
the second resource comprises the first frequency domain subunit in a 1^{st} frequency domain unit in the K frequency domain units; and/or
the second resource comprises the second frequency domain subunit in a K^{th} frequency domain unit in the K frequency domain units.

12. The method according to any one of claims 1 to 6, wherein each of the N frequency domain units comprised in the first resource pool comprises the first frequency domain subunit, the second frequency domain subunit, and the third frequency domain subunit, and the first resource comprises a part or all of a frequency domain resource in the M frequency domain units in the N frequency domain units; and when the first terminal device uses a second duplex mode, the second terminal device uses a first duplex mode, the first terminal device further receives sidelink information on a third resource in the first resource pool, and a time domain resource of the first resource is partially or completely the same as a time domain resource of the third resource,
if the 1^{st} frequency domain unit in the M frequency domain units is adjacent to a frequency domain resource of the third resource, the first resource comprises the third frequency domain subunit in the 1^{st} frequency domain unit in the M frequency domain units, and does not comprise the first frequency domain subunit or the second frequency domain subunit in the 1^{st} frequency domain unit in the M frequency domain units, or if the 1^{st} frequency domain unit in the M frequency domain units is not adjacent to a frequency domain resource of the third resource, the first resource comprises the first frequency domain subunit, the second frequency domain subunit, and the third frequency domain subunit in the 1^{st} frequency domain unit in the M frequency domain units; and/or
if the M^{th} frequency domain unit in the M frequency domain units is adj acent to the frequency domain resource of the third resource, the first resource comprises the third frequency domain subunit in the M^{th} frequency domain unit in the M frequency domain units, and does not comprise the first frequency domain subunit or the second frequency domain subunit in the M^{th} frequency domain unit in the M frequency domain units, or if the M^{th} frequency domain unit in the M frequency domain units is not adjacent to the frequency domain resource of the third resource, the first resource comprises the first frequency domain subunit, the second frequency domain subunit, and the third frequency domain subunit in the M^{th} frequency domain unit in the M frequency domain units.

13. The method according to claim 12, wherein the third resource comprises a part or all of a frequency domain resource in Q frequency domain units in the first resource pool, and Q is an integer greater than or equal to 0, wherein
the third resource comprises the first frequency domain subunit in a 1^{st} frequency domain unit in the Q frequency domain units; and/or
the third resource comprises the second frequency domain subunit in a Q^{th} frequency domain unit in the Q frequency domain units.

14. The method according to any one of claims 1 to 6, wherein each of the N frequency domain units comprised in the first resource pool comprises the first frequency domain subunit, the second frequency domain subunit, and the third frequency domain subunit, and the first resource comprises a part or all of a frequency domain resource in the M frequency domain units in the N frequency domain units; and when the first terminal device uses a second duplex mode, the second terminal device uses the second duplex mode, the first terminal device further receives sidelink information on a third resource in the first resource pool, a time domain resource of the first resource is partially or completely the same as a time domain resource of the third resource, and/or the second terminal device reserves a second resource in the first resource pool, and the time domain resource of the first resource is partially or completely the same as a time domain resource of the second resource,
if the 1^{st} frequency domain unit in the M frequency domain units is adjacent to a frequency domain resource of the second resource, and/or the 1^{st} frequency domain unit in the M frequency domain units is adjacent to a frequency domain resource of the third resource, the first resource comprises the third frequency domain subunit in the 1^{st} frequency domain unit in the M frequency domain units, and does not comprise the first frequency domain subunit or the second frequency domain subunit in the 1^{st} frequency domain unit in the M frequency domain units, or if the 1^{st} frequency domain unit in the M frequency domain units is adjacent to neither a frequency domain resource of the second resource nor a frequency domain resource of the third resource, the first resource comprises the first frequency domain subunit, the second frequency domain subunit, and the third frequency domain subunit in the 1^{st} frequency domain unit in the M frequency domain units; and/or
if the M^{th} frequency domain unit in the M frequency domain units is adj acent to the frequency domain resource of the second resource, and/or the M^{th} frequency domain unit in the M frequency domain units is adjacent to the frequency domain resource of the third resource, the first resource comprises the third frequency domain subunit in the M^{th} frequency domain unit in the M frequency domain units, and does not comprise the first frequency domain subunit or the second frequency domain subunit in the M^{th} frequency domain unit in the M frequency domain units, or if the M^{th} frequency domain unit in the M frequency domain units is adjacent to neither the frequency domain resource of the second resource nor the frequency domain resource of the third resource, the first resource comprises the first frequency domain subunit, the second frequency domain subunit, and the third frequency domain subunit in the M^{th} frequency domain unit in the M frequency domain units.

15. The method according to claim 7, 9, 10, 11, 12, or 13, wherein the first duplex mode is a time division duplex mode.

16. The method according to claim 8, 10, 11, 12, 13, or 14, wherein the second duplex mode is a subband full duplex mode or a frequency division duplex mode.

17. The method according to any one of claims 1 to 16, wherein when each of the N frequency domain units comprised in the first resource pool comprises the first frequency domain subunit, the second frequency domain subunit, and the third frequency domain subunit, the method further comprises:
sending sidelink control information to the second terminal device, wherein the sidelink control information is carried on a sidelink control channel, the sidelink control channel is mapped to the third frequency domain subunit in at least one frequency domain unit, the first resource comprises a part or all of a frequency domain resource in the M frequency domain units in the N frequency domain units, and the at least one frequency domain unit belongs to the M frequency domain units.

18. The method according to claim 17, wherein the at least one frequency domain unit is the 1^{st} frequency domain unit in the M frequency domain units.

19. The method according to claim 17 or 18, wherein
the sidelink control information indicates whether the first resource comprises the first frequency domain subunit in the 1^{st} frequency domain unit in the M frequency domain units and/or whether the first resource comprises the second frequency domain subunit in the M^{th} frequency domain unit in the M frequency domain units.

20. The method according to any one of claims 1 to 19, wherein each of the N frequency domain units is a minimum frequency domain resource scheduling unit in the first resource pool.

21. A communication method, wherein the method is applied to a second terminal device, and comprises:
receiving first sidelink information from a first terminal device on a first resource, wherein the first resource belongs to a first resource pool, the first resource pool comprises N frequency domain units, and N is a positive integer, wherein
each of the N frequency domain units comprises a first frequency domain subunit, a second frequency domain subunit, and a third frequency domain subunit; or
a 1^{st} frequency domain unit in the N frequency domain units comprises a second frequency domain subunit and a third frequency domain subunit, and/or an N^{th} frequency domain unit in the N frequency domain units comprises a first frequency domain subunit and a third frequency domain subunit, and each of a 2^{nd} frequency domain unit to an (N-1)^{th} frequency domain unit in the N frequency domain units comprises a first frequency domain subunit, a second frequency domain subunit, and a third frequency domain subunit; or
a 1^{st} frequency domain unit in the N frequency domain units comprises a third frequency domain subunit, and/or an N^{th} frequency domain unit in the N frequency domain units comprises a third frequency domain subunit, and each of a 2^{nd} frequency domain unit to an (N-1)^{th} frequency domain unit in the N frequency domain units comprises a first frequency domain subunit, a second frequency domain subunit, and a third frequency domain subunit.

22. The method according to claim 21, wherein the first frequency domain subunit is adjacent to the third frequency domain subunit, and the third frequency domain subunit is adjacent to the second frequency domain subunit.

23. The method according to claim 21 or 22, wherein the method further comprises:
receiving configuration information, wherein the configuration information is used to configure the first resource pool.

24. The method according to any one of claims 21 to 23, wherein each of the N frequency domain units comprised in the first resource pool comprises the first frequency domain subunit, the second frequency domain subunit, and the third frequency domain subunit, the first resource comprises a part or all of frequency domain resources in M frequency domain units in the N frequency domain units, and M≥2, wherein
the first resource comprises the second frequency domain subunit and the third frequency domain subunit in a 1^{st} frequency domain unit in the M frequency domain units; and/or
the first resource comprises the first frequency domain subunit and the third frequency domain subunit in an M^{th} frequency domain unit in the M frequency domain units.

25. The method according to claim 24, wherein M≥3; and
the first resource comprises the first frequency domain subunit, the second frequency domain subunit, and the third frequency domain subunit in each of a 2^{nd} frequency domain unit to an (M-1)^{th} frequency domain unit in the M frequency domain units.

26. The method according to any one of claims 21 to 25, wherein when each of the N frequency domain units comprised in the first resource pool comprises the first frequency domain subunit, the second frequency domain subunit, and the third frequency domain subunit, the method further comprises:
receiving sidelink control information from the first terminal device, wherein the sidelink control information is carried on a sidelink control channel, the sidelink control channel is mapped to the third frequency domain subunit in at least one frequency domain unit, the first resource comprises a part or all of a frequency domain resource in the M frequency domain units in the N frequency domain units, and the at least one frequency domain unit belongs to the M frequency domain units.

27. The method according to claim 26, wherein the at least one frequency domain unit is the 1^{st} frequency domain unit in the M frequency domain units.

28. The method according to claim 26 or 27, wherein the method further comprises:
determining, based on the sidelink control information, whether the first resource comprises the first frequency domain subunit in the 1^{st} frequency domain unit in the M frequency domain units and/or whether the first resource comprises the second frequency domain subunit in the M^{th} frequency domain unit in the M frequency domain units.

29. The method according to any one of claims 21 to 28, wherein each of the N frequency domain units is a minimum frequency domain resource scheduling unit in the first resource pool.

30. A communication apparatus, comprising a processor and a memory, wherein the memory is coupled to the processor, and the processor is configured to perform the method according to any one of claims 1 to 20, or is configured to perform the method according to any one of claims 21 to 29.

31. A computer-readable storage medium, wherein the computer-readable storage medium is configured to store a computer program, and when the computer program is run on a computer, the computer is enabled to perform the method according to any one of claims 1 to 20, or the computer is enabled to perform the method according to any one of claims 21 to 29.

32. A chip system, wherein the chip system comprises:
a processor and an interface, wherein the processor is configured to: invoke instructions from the interface and run the instructions, and when executing the instructions, the processor implements the method according to any one of claims 1 to 20, or implements the method according to any one of claims 21 to 29.

33. A computer program product, wherein the computer program product comprises a computer program, and when the computer program is run on a computer, the computer is enabled to perform the method according to any one of claims 1 to 20, or the computer is enabled to perform the method according to any one of claims 21 to 29.
